# EUROPÄISCHE PATENTANMELDUNG

(11) **EP 2 456 015 A2**
(43) Veröffentlichungstag der Anmeldung: **23.05.2012**
(21) Anmeldenummer: 11190067.6
(22) Anmeldetag: 22.11.2011
(51) Int. Cl.: H01R 13/436, H01R 13/502, H01R 13/52, H01R 13/703, H01R 13/717, H01R 107/00

(54) **Steckdose eines Kraftfahrzeugs**

(30) Priorität: 23.11.2010 DE 202010015648 U; 23.11.2010 DE 202010015647 U; 23.11.2010 DE 202010015646 U; 16.06.2011 DE 202011102857 U; 09.11.2011 DE 202011051902 U
(71) Anmelder: ERICH JAEGER GmbH + Co. KG, 61169 Friedberg (DE)
(72) Erfinder: Markefka, Klaus, 61197 Florstadt (DE); Kress, Michael, 61352 Bad Homburg (DE)
(74) Vertreter: KEIL & SCHAAFHAUSEN Patentanwälte

(57) **Zusammenfassung**

Es wird eine Steckdose (1) eines Kraftfahrzeugs für die Aufnahme eines Steckers eines Anhängerstromkreises zur Anbindung an das elektrische System eines Kraftfahrzeugs beschrieben. Die Steckdose (1) ist mit einem an dem Kraftfahrzeug festlegbaren Dosengehäuse (2), mit einem mit dem Dosengehäuse (2) einteilig verbundenen Kontaktträger (3), von dem Anschlussleitungen an das elektrische System des Kraftfahrzeugs wegführbar sind, und mit einem an das Dosengehäuse (2) angelenkten Deckel (4) zum abdichtenden Verschließen einer Einstecköffnung (5) für den Stecker versehen. Zur Abdichtung sind in den Kontaktträger (3) Kontakte (10) in derart abdichtender Weise aufnehmbar, dass keine Feuchtigkeit aus dem Bereich der Einstecköffnung (5) durch den Kontaktträger (3) durchtreten kann.

## Beschreibung

Die Erfindung betrifft eine Steckdose eines Kraftfahrzeugs für die Aufnahme eines Steckers eines Anhängerstromkreises zur Anbindung an das elektrische System eines Kraftfahrzeugs mit einem an dem Kraftfahrzeug festlegbaren Dosengehäuse, mit einem mit dem Dosengehäuse einteilig verbundenen Kontaktträger, von dem Anschlussleitungen an das elektrische System des Kraftfahrzeugs wegführbar sind, und mit einem an das Dosengehäuse angelenkten Deckel zum abdichtenden Verschließen einer auch als Einsteckraum bezeichneten Einstecköffnung für den Stecker.

Häufig wird der Kontaktträger als auch Kontakteinsatz bezeichnet, obwohl er aufgrund der einteiligen Verbindung nicht separat in das Dosengehäuse eingesetzt wird, sondern einteilig mit diesem verbunden ist. Dieser Kontaktträger bzw. -einsatz ist Teil der erfindungsgemäßen Steckdose, die häufig als sog. 13-polige Anhängersteckdose für die Verbindung des elektrischen Systems eines Personenkraftwagens mit dem elektrischen System, insbesondere dem Beleuchtungssystem, eines Anhängers eingesetzt wird, wobei in bisher üblichen, typischen Anwendungsfällen nicht alle der 13 zur Verfügung stehenden Pole der 13-poligen Anhängersteckdose genutzt werden.

Aufgrund ihrer Anordnung außen am Kraftfahrzeug und in Straßennähe ist ein großes Problem bei den Anhängersteckdosen die Dichtheit gegen eindringende Feuchtigkeit, die zum einen zu Kurzschlüssen führen kann und zum anderen entlang des Kabelbaums und innerhalb der einzelnen Leitungen bis hin zu den elektrischen Steuergeräten des Fahrzeugs kriechen kann. Letzteres ist besonders gefährlich, weil dies im schlimmsten Fall einen Ausfall der gesamten Steuerelektronik hervorrufen kann. Diese Problematik ist aktueller denn je, weil die zunehmende Ausstattung der Fahrzeuge mit empfindlichen elektronischen Steuergeräten, die häufig auch untereinander versetzt sind, dazu führt, dass die Kraftfahrzeuge auch für ihren normalen Betrieb immer mehr von der Funktionstüchtigkeit des gesamten elektrischen Systems abhängen.

Die üblichen Anhängersteckdosen weisen daher meist drei Dichtungssysteme auf.

Die erste Dichtung findet sich in dem Deckel der Steckdose, die mit der vorderen Stirnseite der die Einstecköffnung begrenzenden Steckdosenwand zusammenwirkt und den sich an die Einstecköffnung anschließenden Einsteckraum respektive die Einstecköffnung der Steckdose abdichtet, in dem sich der Kontakteinsatz mit dem Kontakten frei zugänglich befindet. Diese Dichtung wirkt, wenn die Steckdose nicht in Gebrauch ist und kein Stecker in die Steckdose eingesteckt ist.

Eine zweite Dichtung findet sich an dem dem Rand der Einstecköffnung gegenüberliegenden Boden der Einstecköffnung, welche mit der Stirnseite eines eingesteckten Steckers zusammenwirkt, um den Kontaktbereich zwischen Stecker und Kontaktträger bzw. Kontakteinsatz im Gebrauchsfall abzudichten.

Eine dritte Dichtung findet sich üblicherweise auf der bestückungsseitigen Rückseite der Steckdose, um den Kontaktanschlussbereich bzw. Anschlussraum, in dem die Kontakte mit den Anschlussleitungen elektrisch leitend verbunden sind, abzudichten.

Diese verschiedenen Dichtungen schaffen unter normalen Einsatzbedingungen eine ausreichende Dichtheit der Steckdose, weisen aber in der Praxis trotzdem gewisse Probleme auf. Die in dem Deckel befindliche Dichtung verschmutzt im Gebrauch leicht, wobei sich kleine Steinchen oder Sand auf der Dichtfläche ablagern. Hierdurch wird die Dichtwirkung stark beeinträchtigt. Außerdem funktioniert die Dichtung nur, solange die Anpresskraft der Deckelfeder ausreicht, um den Deckel in Verschlussstellung zu halten. Bei der Säuberung des Kraftfahrzeugs mit einem Wasserstrahl oder Bürsten, wie bspw. in einer Waschstraße üblich, kann es vorkommen, dass sich der Deckel von dem Steckdosengehäuse abhebt und Wasser in die Einstecköffnung eindringt. Außerdem werden Steckdosen am Kraftfahrzeug zunehmend im Schmutzbereich angeordnet, um die Steckdosen für den Nutzer leichter zugänglich zu machen. Ein Beispiel hierfür ist die Montage der Steckdose im Kugelhals der Anhängerkupplung.

Ähnliche Probleme ergeben sich, wenn ein in die Steckdose eingesteckter Stecker an der Stirnseite beschädigt ist oder der Stecker nicht der Norm entspricht, so dass mit der zweiten Dichtung im Gebrauchsfall keine ausreichende Dichtwirkung erreicht wird.

Das Vorsehen der dritten Dichtung, die bspw. als eine auf einer Montagefläche abgestützte Flachdichtung oder als eine in einer rückwärtigen Außenkappe der Steckdose aufgenommene Ringdichtung ausgebildet sein kann, bereitet in der Praxis kaum Probleme bei der Dichtwirkung, sofern die Dichtung richtig montiert wurde. Allerdings werden die Steckdosen häufig während der Fahrzeugmontage am Band verbaut. Dort geschieht es unter Zeitdruck immer wieder, dass die rückwärtige Dichtung nicht optimal zu der Steckdose ausgerichtet ist. Dies hat im realen Betrieb Dichtheitsprobleme zur Folge, die allerdings bei der Montage und Endkontrolle nicht auffallen und daher häufig nicht erkannt werden.

Es ist daher wünschenswert, die Dichtheit der funktionsrelevanten Abschnitte der Steckdose auch unabhängig von der Montagequalität am Band zu erreichen. Außerdem schränkt diese dritte Dichtung die Gestaltungsmöglichkeiten der (rückwärtigen) Bestückungsseite der Steckdose erheblich ein, da die Steckdose immer so ausgebildet sein muss, dass eine zuverlässige Dichtwirkung des gesamten rückwärtigen Steckdosenraums gewährleistet ist.

Um bei einer Fehlfunktion der ersten und zweiten Dichtung zur Abdichtung des Kontaktbereichs in dem Einsteckraum eine zusätzlich Sicherheit zu schaffen und den Anschlussbereich der Kontakte an die Anschlussleitungen vor Feuchtigkeit zu schützen, wird bspw. in der DE 20 2004 009 662 U1 vorgeschlagen, die in den Kontakteinsatz eingesteckten Kontakte mit einer zusätzlichen Ringdichtung in der Kontaktkammer (d.h. der Durchgangsöffnung des Kontakteinsatzes zur Aufnahme des Kontakts) abzudichten. Hierdurch wird ein Eindringen von Feuchtigkeit oder Flüssigkeit im Bereich der Kabelanschlüsse der Anschlussleitungen an die Kontakte auch dann verhindert, wenn Feuchtigkeit in die Einstecköffnung oder in den Kontaktbereich zwischen Stecker und Kontakteinsatz eindringt. Diese Lösung ist jedoch sehr aufwändig, weil für jeden der bis zu 13 in dem Kontakteinsatz einer 13-poligen Anhängersteckdose aufgenommenen Kontakte eine separate Ringdichtung positionsgenau in der Kontaktkammer zwischen dem eigentlichen Kontakt und dem Kontaktträger angeordnet werden muss. Bei nicht richtiger Positionierung ist auch die Dichtwirkung dieser zusätzlichen Ringdichtung nicht zuverlässig.

Auf einem anderen technischen Gebiet, nämlich einer kraftstoffdichten Durchführung von elektrischen Kontaktelementen durch eine Wandung, sind stiftartigen Kontaktelemente mit einem zumindest abschnittsweise ausgebildeten Tannenbaumprofil bekannt, mit welchem die Kontaktelemente in eine Durchgangsöffnung eingedrückt werden, wobei sich das Tannenbaumprofil in die Wandung der Durchgangsöffnung eindrückt und auf diese Weise eine Dichtwirkung erreicht. Das Tannenbaumprofil weist mit seiner Spitze in Einsteckrichtung, so dass es zum sicheren Festlegen der pinartigen Steckkontaktelemente zusätzlich mit einem flanschartigen Montagebund versehen sind, der sich in Einsteckrichtung auf der Wandung der Durchgangsöffnung für die Pin- oder Stiftkontakte abstützt. Hierdurch sind die Kontakte in der Herstellung aufwändig. Außerdem lässt sich diese Ausführung aus Platzgründen nicht bei als Buchsenkontakte ausgebildeten Kontakten verwenden, wie sie bei Anhängersteckdosen entsprechend der Normvorgaben vorgeschrieben sind.

Aus der DE 1 951 185 U ist ferner eine Steckdose mit einem einteilig in die Steckdose aufgenommenen Kontaktträger bekannt, bei dem die Kontakte an einem rückwärtigen Ende in einer Zwischenwand des aus thermoplastischen Kunststoff gefertigten Steckdosengehäuses festgelegt sind. Hierzu weisen die Kontaktteile am rückwärts weisenden Schaftteil eine Einschnürung oder Ringnut auf, welche in Höhe der Durchtrittsöffnungen der Zwischenwand liegt und die Festlegung der Kontaktteile durch Einsprengung ermöglicht, so dass diese Kontakte auch nach Verlöten mit den Anschlussleitungen in die Steckdose eingebracht werden können. Auch dies ist jedoch in der Herstellung aufwändig, weil bei dem Eindrücken der Kontakte in die Zwischenwand die Lötstelle unter Umständen beschädigt wird. Außerdem liegt durch das Einsprengen der Kontakte in die entsprechend vorgeformte Zwischenwand ein Kontakt nicht unter Druck an der Zwischenwand an, so dass keine zuverlässige Dichtwirkung erreicht wird.

Aus der DE 38 41 006 A1 ist eine Steckdose mit einem Dosengehäuse und einem einteilig mit dem Dosengehäuse ausgebildeten Kontaktaufnahmeteil bekannt, in das bodenseitig ein Kontaktträger mit den Hülsenteilen der Kontakte einschiebbar ist. Allerdings wird hierdurch keine Abdichtung der Kontakte untereinander erreicht, so dass in die Einstecköffnung eintretende Feuchtigkeit zwischen verschiedenen Kontakten zu einer leitenden Verbindung (Kriechstrom) führen kann, die Kurzschlüsse hervorruft.

Eine ähnliche Ausführungsform zeigt die DE 39 18 548 A1, bei welcher Kontakte von der Bestückungsseite aus in eine Kontaktaufnahme eingeschoben und dort mittels einer Ringdichtung abgedichtet werden. Zum Halten der Kontakte in der Kontaktaufnahme ist eine sich rückwärtig auf der Montagefläche abstützende Kontaktträgerplatte vorgesehen. Auch hier ist der Zusammenbau aufwändig, zumal bei einer 13-poligen Steckdose die einzelnen Kontakte nach Anschluss an die Anschlussleitungen in die jeweiligen Öffnungen der Kontaktaufnahme eingeschoben werden müssen, was zu Verpolungen führen kann. Außerdem ist das Vorsehen einer Ringdichtung an den einzelnen Kontakten aufwändig.

Aufgabe der vorliegenden Erfindung ist es daher, eine Steckdose der eingangs genannten Art vorzusehen, bei der der Anschlussbereich, in welchem die Kontakte der Steckdose mit dem elektrischen System des Kraftfahrzeugs verbunden werden, zuverlässig abgedichtet ist, wobei der Montageaufwand insgesamt (sowohl bei der Herstellung oder Konfektionierung der Steckdose als auch für die Montage der Steckdose am Kraftfahrzeug) klein gehalten werden soll.

Diese Aufgabe wird erfindungsgemäß durch eine Steckdose mit den Merkmalen des Anspruchs 1 gelöst, wobei in den Kontakteinsatz auch als Kontakthülse oder Anschlusskontakt bezeichnete Kontakte in derart abdichtender Weise aufnehmbar bzw. aufgenommen und vorzugsweise gleichzeitig festlegbar bzw. festgelegt sind, dass keine Feuchtigkeit aus dem Bereich der Einstecköffnung für den Stecker durch den Kontaktträger in den Anschlussraum der Steckdose hindurchtreten kann, in dem der Anschluss an die Anschlussleitungen erfolgt. Erfindungsgemäß wesentlich ist hierbei, dass die Kontakte in dem Kontaktträger derart fixiert werden, dass die Mittel zur Fixierung gleichzeitig der Abdichtung des Kontakts in dem Kontaktträger und der mechanischen Aufnahme der Einsteckkräfte dienen.

Unter dem Anschlussbereich der Steckdose ist in der Notation dieses Schutzrechts der der Einstecköffnung gegenüberliegende, auch als anschlussseitig oder bestückungsseitig bezeichnete Teil der Steckdose zu verstehen, von dem die mit den Kontakten zu verbindenden bzw. verbundenen Anschlussleitungen an das elektrische System des Kraftfahrzeugs weggeführt werden und von dem aus die Kontakte bei der Konfektionierung oder Herstellung der Steckdose in den Kontaktträger eingesteckt werden. Dieser bestückungsseitige Anschlussbereich bildet auch die Rückseite der Steckdose, die der Vorderseite der Steckdose gegenüberliegt, an welcher die durch den Deckel verschließbare Einstecköffnung liegt und welche die Seite bildet, von der aus der Stecker des Anhängerstromkreises in die Steckdose bzw. die Einstecköffnung eingesteckt wird.

Vorzugsweise hat der Kontaktträger dazu einen Kontakteinsatzkörper, in dem als Durchgangsöffnungen ausgebildete Kontaktkammern zur Aufnahme der Kontakte vorgesehen sind, wobei die Kontaktkammern sich in axialer Richtung durch den Kontakteinsatzkörper erstrecken und eine einsteckseitige Öffnung sowie eine bestückungsseitige Öffnung aufweisen. Der Innendurchmesser der Durchgangsöffnung kann zumindest im Bereich der Endmontageposition eines in die Durchgangsöffnung aufgenommenen Kontakts dem Außendurchmesser einer äußeren Mantelfläche des Kontakts zumindest abschnittsweise entsprechen und kleiner sein als der Außendurchmesser eines Befestigungsvorsprungs auf der äußeren Mantelfläche des aufzunehmenden Kontakts. Dazu kann der in den Kontaktträger aufnehmbare bzw. aufgenommene Kontakt eine zylindrische Mantelfläche aufweisen, auf der nach außen vorstehend mindestens ein Befestigungsvorsprung ausgebildet ist, der ein Tannenbaumprofil aufweist. Bei dem auch als Dornprofil bezeichneten Tannenbaumprofil, bei dem von der Mantelfläche des Kontakts zumindest eine auf der Mantelfläche ringförmig umlaufende Nase mit einem Dreiecksprofil nach außen vorsteht, weist die Spitze des Dreiecksprofils in Richtung der Einsteckseite des Kontaktes, d.h. in die Richtung, in welcher der Kontakt von der Bestückungsseite aus in den Kontaktträger eingeschoben wird.

Da das Tannenbaumprofil einen größeren Außendurchmesser aufweist als der Innendurchmesser der Durchgangsöffnung in dem Kontaktträger, kann der Kontakt in Richtung der Dreiecksspitze in den Kontaktträger, d.h. dessen Durchgangsöffnung bzw. Kontaktkammer, eingeschoben bzw. eingepresst werden, vorzugsweise bis der Kontakt in der Kontaktkammer an der verjüngten einsteckseitigen Öffnung des Kontaktträgers anstößt.

Vorzugsweise ist der Kontakt als Buchsenkontakt ausgebildet, d.h. für die Aufnahme eines Pins des in die Steckdose einzusteckenden Steckers ausgebildet, wobei dieser Pin durch die verjüngte einsteckseitige Öffnung des Kontaktträgers in den Buchsenkontakt eingesteckt werden kann. Durch die Ausrichtung des Tannenbaumprofils mit vorzugsweise zwei in Axialrichtung hintereinander angeordneten Nasen werden die beim Einstecken des Pins in den Buchsenkontakt auftretenden Kräfte in der Durchgangsöffnung des Kontaktträgers aufgefangen, d.h. der Buchsenkontakt bzw. Kontakt sicher in dem Kontaktträger fixiert. Da die vorstehenden Nasen des Tannenbaum- bzw. Dornprofils auch im montierten Zustand unter Anpressdruck an der Innenwand der Durchgangsöffnung anliegen bzw. sich in diese eingedrückt haben, findet gleichzeitig eine zuverlässige Abdichtung statt. Daher ist vorzugsweise vorgesehen, dass die Nasen des Tannenbaum- bzw. Dornprofils zwischen einer Spülbohrung des Buchsenkontakts und dem bestückungsseitigen Ende des Kontaktes angeordnet sind, so dass Feuchtigkeit auch nicht durch die Spülbohrung in den Anschlussbereich der Steckdose eindringen kann.

Gemäß einer besonders bevorzugten Ausführungsform weisen die, d.h. ein Teil der oder vorzugsweise alle, Kontakte an ihren bestückungsseitigen, d.h. dem Anschlussbereich der Steckdose zugewandten, Enden als Kontaktanschluss zum Anschließen der Anschlussleitungen an das elektrische System des Kraftfahrzeugs jeweils einen insbesondere als Pin- oder Stiftkontakt ausgebildeten Steckkontakt auf, wobei die Steckkontakte der in den Kontaktträger aufgenommenen Kontakte aus dem Kontaktträger hinaus in einen Anschlussraum der Steckdose hineinragen.

Der Anschlussraum ist in dem bestückungsseitigen Teil der Steckdose ausgebildet und schließt vorzugsweise unmittelbar an das anschluss- bzw. bestückungsseitige Ende des Kontaktträgers an, wobei der Anschlussraum durch eine sich in Richtung der Anschlussseite erstreckende Anschlussraumwandung des Dosengehäuses der Steckdose gebildet ist. Der Anschlussraum ist im Wesentlich dem Anschlussbereich der Steckdose identisch.

Erfindungsgemäß können die Kontakte einsteckseitig, d.h. auf der dem in die Steckdose einzusteckenden Stecker des Anhängerstromkreises zugewandten Seite, als Buchsenkontakte mit äußerer zylindrischer Mantelfläche, d.h. als Hohlzylinder, ausgebildet sein, wobei der Steckkontakt von der zylindrischen Mantelfläche an dem der Einsteckseite gegenüberliegenden, bestückungsseitigen Ende in axialer Richtung von der Grundfläche der zylindrischen Mantelfläche vorsteht und einen kleineren Durchmesser als die zylindrische Mantelfläche aufweist.

Vorzugsweise schließt die zylindrische Mantelfläche, welche den Buchsenkontakt bildet, bündig oder nahezu bündig mit dem anschlussseitigen Ende des Kontaktträgers, bzw. anders ausgedrückt bündig mit der bestückungsseitigen Öffnung der Durchgangsöffnung bzw. Kontaktkammer des Kontaktträgers, ab, so dass der Steckkontakt von der bestückungsseitigen Seite des Kontaktträgers in den Anschlussraum der Steckdose hineinragt.

Durchgangsöffnungen des Kontaktträgers werden auch als Kontaktkammern zur Aufnahme von Kontakten bezeichnet, wobei sich die Kontaktkammern in axialer Richtung der Steckdose und des Kontaktträgers erstrecken und in dem den Kontaktträger bildenden Kontaktträgerköper die einsteckseitige Öffnung zur Aufnahme der Gegenkontakte des Anhängerstromkreis-Steckers und die bestückungsseitige Öffnung zum Einstecken bzw. Einpressen der Kontakte in den Kontaktträger und/oder zum Austritt der Steckkontakte für den Anschluss an das elektrische System des Kraftfahrzeugs ausbilden.

Einfacherweise kann die Höhe des Kontaktträgers in axialer Richtung seiner Durchgangsöffnung gerade so bemessen sein, dass der von der bestückungsseitigen Öffnung in den Kontaktträger eingeführte Kontakt mit seiner zylindrischen Mantelfläche am bestückungsseitigen Ende des Kontaktträgers bündig abschließt, wenn die einsteckseitige Stirnfläche des Kontaktträgers an der verjüngten eingangsseitigen Öffnung anstößt. In dieser Position sichern die Nasen des Tannenbaum- bzw. Dornprofils den Kontakt in der Durchgangsöffnung des Kontaktträgers auch gegen ein Herausdrücken beim Einstecken des Steckers in den Buchsenkontakt (des Kontakts) und dichten gleichzeitig die Durchgangsöffnung gegenüber dem Anschlussraum ab.

In vorteilhafter Weiterbildung dieses Erfindungsgedankens kann ein in dem Steckdosengehäuse festlegbarer Kontaktstecker vorgesehen sein, welcher bestückungsseitig auf die Steckkontakte (der Kontakte) aufsteckbar ist, wobei der Kontaktstecker insbesondere als Buchsenkontakte (des Kontaktsteckers) ausgebildete, in den Kontaktstecker aufnehmbare oder aufgenommene Kontaktanschlussteile zum Aufstecken auf die bestückungsseitigen Steckkontakte (der Kontakte), einen Steckerträger zum Aufnehmen und Primärverriegeln der Kontaktanschlussteile und eine Steckerverriegelung zum Aufnehmen und Sekundärverriegeln der Kontaktanschlussteile aufweist, wobei der Steckerträger und die Steckerverriegelung jeweils Durchgangsöffnungen zur Aufnahme der Kontaktanschlussteile aufweisen und zueinander in Richtung quer zu den Achsen der Durchgangsöffnung des Steckerträgers verschiebbar ausgebildet sind. Ferner ist erfindungsgemäß vorgesehen, dass die Achsen der Durchgangsöffnungen der Steckerverriegelung zu den Achsen der Durchgangsöffnungen des Steckerträgers, vorzugsweise um einen Neigungswinkel zwischen 1° und 10°, geneigt sind.

Die bevorzugten Kontaktanschlussteile sind als Buchsenkontakte mit einem bestückungsseitigen Crimp-Kontaktanschluss oder Löt-Kontaktanschluss zum Anschließen der Anschlussleitungen ausgebildet. Der Buchsenkontakt (des Kontaktanschlussteils bzw. Kontaktsteckers) wird auf den Steckkontakt (des Kontakts) aufgesteckt, der in den Anschlussraum der Steckdose hineinragt. Die zu dem elektrischen System des Kraftfahrzeugs führende Anschlussleitung wird an dem Crimp-Kontaktanschluss oder Löt-Kontaktanschluss festgelegt, wobei in der Herstellung ein Crimp-Kontaktanschluss einfacher kontaktierbar ist, da er als Stanz-Biege-Bauteil gefertigt und als Bandware automatisch angeschlagen werden kann. Der Kontaktstecker dient also bei der Montage Steckdose dem einfachen Anschluss der Anschlussleitungen an die Kontakte. Hier ist auch von Vorteil, dass der Kontaktstecker bereits bei der Konfektionierung mit den Anschlussleitungen bestückt und dann bei der Montage der Steckdose einfach aufgesteckt werden kann.

Dazu ist der Kontaktstecker vorzugsweise mit dem Steckdosengehäuse verrastbar ausgebildet, wenn die Kontaktanschlussteile mit dem Kontaktstecker auf die Steckkontakte des Kontaktträgers aufgesteckt werden.

Die erfindungsgemäß vorgeschlagene Primärverriegelung in dem Steckerträger erfolgt vorzugsweise durch federnde Rastlaschen, die außen an dem Kontaktanschlussteil vorgesehen sind und seitlich bspw. von dessen Umfangsrand abstehen, und durch einen Rastvorsprung in der Durchgangsöffnung des Steckerträgers, welche bei in den Kontaktstecker eingesteckten Kontaktanschlussteilen derart zusammenwirken, dass die Rastlaschen sich im Montagezustand des Kontaktanschlussteils an dem Rastvorsprung in der Durchgangsöffnung des Steckerträgers abstützen, um ein axiales Zurückschieben des Kontaktanschlussteils bzw. dessen Buchsenkontakte beim Stecken auf die Steckkontakte des Kontaktträgers zu verhindern. Bereits hierdurch ist das Kontaktanschlussteil sicher auf den Steckkontakt aufgesteckt, da der Kontaktstecker selbst mit dem Steckdosengehäuse verrastet und auf andere Weise lösbar daran gesichert ist.

Eine von der Primärverriegelung verschiedene Sekundärverriegelung der Kontaktanschlussteile in dem Kontaktstecker wird dadurch erreicht, dass der Steckerträger und die Steckerverriegelung relativ zueinander verschiebbar ausgebildet sind, wobei nach einem Verschieben des Steckerträgers und der Steckerverriegelung eine axiale Bewegung des eingesteckten Kontaktanschlussteils in Richtung der Bestückungsseite der Steckdose auch aufgrund der Relativverschiebung zwischen Steckerträger und Steckerverriegelung unmöglich ist. Die Verschiebung zwischen dem Steckerträger und der Steckerverriegelung kann vorzugsweise über eine an dem Steckerträger und der Steckerverriegelung vorgesehene Nutführung erfolgen, die in Verschiebungsrichtung eine Relativbewegung zwischen Steckerträger und Steckerverriegelung zulässt.

Gemäß einer besonders bevorzugten Ausführungsform ist erfindungsgemäß vorgesehen, dass die Durchgangsöffnungen von Steckerträger und Steckerverriegelung an den aufeinanderliegenden Berührungsflächen von Steckerträger und Steckerverriegelung in einer ersten Verschiebeposition im Rahmen der Genauigkeit vorzugsweise konzentrisch übereinander liegen und in einer zweiten Verschiebeposition versetzt zueinander sind, wobei die Durchgangsöffnungen von Steckerträger und Steckerverriegelung in der Verschiebeebene erfindungsgemäß eine Schnittmenge bilden, die kleiner als die ursprüngliche Öffnung ist. Hierdurch wird das Kontaktanschlussteil fixiert. Dabei kann der Rand der Durchgangsöffnung der Steckerverriegelung in die Durchgangsöffnung des Steckerträgers und in eine Ausnehmung des in den Durchgangsöffnungen von Steckerträger und Steckerverriegelung aufgenommenen Kontaktanschlussteils eingreifen. So können die Kontaktanschlussteile in der ersten Verschiebeposition in die Durchgangsöffnungen von Steckerträger und Steckerverriegelung eingeschoben und in der zweiten Verriegelungsposition zusätzlich sekundär verriegelt werden.

Steckerträger und Steckerverriegelung können erfindungsgemäß zumindest in der zweiten Verschiebeposition sicherbar, insbesondere verrastbar, sein, um ein ungewolltes Verschieben zu verhindern. Die entsprechende Rastverbindung kann an der Nutführung zur Verschiebung von Steckerträger und Steckerverriegelung ausgebildet sein, und zusätzlich eine Vorverrastung in der ersten Verschiebeposition vorsehen, in welcher sich die Kontaktanschlussteile in die in dieser Position im Wesentlichen durchgehende Durchgangsöffnung in dem Kontaktstecker einstecken lassen. Unter der im Wesentlichen durchgehende Durchgangsöffnung des Kontaktsteckers ist zu verstehen, dass die Durchgangsöffnung in dem Steckerträger und die Durchgangsöffnung in der Steckerverriegelung zwar winklig bzw. geneigt zueinander ausgebildet sind, jedoch an den Berührungsflächen in der ersten Verschiebeposition derart aufeinander abgestimmt sind, dass die Öffnungen der Durchgangsöffnungen in den Berührungsflächen von Steckerträger und Steckerverriegelung in dieser Verschiebeposition im Wesentlichen deckungsgleich aufeinander liegen, so dass ein Kontaktanschlussteil einfach durchgeschoben werden kann.

Hierzu ist es besonders vorteilhaft, wenn auch der Steckerträger im Bereich der Berührungsfläche (Öffnungsbereich) abgeschrägte Innenwandflächen der Durchgangsöffnungen aufweist, damit diese in der ersten Verschiebeposition mit den Öffnungen der Durchgangsöffnung der Steckerverriegelung in der Berührungsfläche im Wesentlichen übereinstimmen. Unter dieser Schrägstellung der Innenwände der Durchgangsöffnung in dem Steckerträger im Öffnungsbereich ist erfindungsgemäß jedoch keine Verneigung der Achse der Durchgangsöffnung insgesamt zu verstehen, da das Kontaktanschlussteil in den Steckerträger (bei nicht vorhandener Steckerverriegelung) in der mit der Axialrichtung der Steckdose zusammenfallenden Axialrichtung der Durchgangsöffnung des Steckerträgers eingesteckt werden könnte.

Erfindungsgemäß kann ferner vorgesehen sein, dass der Kontaktstecker nur in der zweiten Verschiebeposition in den Einsteckraum der Steckdose einsetzbar ist. Durch die Sicherung von Steckerträger und Steckerverriegelung in der zweiten Verschiebeposition wird auch die Montage der Steckdose bspw. bei der Konfektionierung erleichtert, da die Kontaktanschlussteile in dem Kontaktstecker nach Befestigung der Anschlussleitungen insbesondere durch Crimpen einfach gesichert werden können.

Die Durchgangsöffnung in dem Steckerträger kann zum Festlegen der Kontaktanschlussteile und zur Ausbildung der Primär- und der Sekundärverriegelung vorzugsweise derart ausgebildet sein, dass der Rastvorsprung im Mittelabschnitt des Steckerträgers den Bereich mit dem kleinsten Innendurchmesser der Durchgangsöffnung bildet und an beiden Öffnungen bzw. Öffnungsseiten des Steckerträgers ein größerer Durchmesser vorgesehen ist. Einsteckseitig dient der größere Durchmesser für die Aufnahme der federnden Rastlaschen, welche ein Zurückschieben des Kontaktanschlussteils in Richtung der Anschlussseite verhindern. Bestückungsseitig ist der Bereich mit größerem Durchmesser für Führungsvorsprünge an dem Kontaktanschlussteil vorgesehen, hinter denen bestückungsseitig die Ausnehmung des Kontaktanschlussteils ausgebildet ist, in welcher der Rand der Durchgangsöffnung der Steckerverriegelung für die Sekundärverriegelung eingreift. Gleichzeitig wird durch den verengten Mittelabschnitt (Rastvorsprung) in dem Steckerträger ein zu tiefes Einschieben des Kontaktanschlussteils in den Steckerträger bzw. den Kontaktstecker verhindert.

In Weiterbildung des erfindungsgemäß vorgeschlagenen Kontaktsteckers kann zur Abdichtung am Außenumfang des Kontaktsteckers, vorzugsweise am Außenumfang der Steckerverriegelung, eine Umfangsdichtung angeordnet sein, welche nach Aufstecken des Kontaktsteckers auf die Steckkontakte an einer als Umfangsfläche des Dosengehäuses ausgebildeten Dichtfläche anliegt und/oder dass an dem bestückungsseitigen Ende des Kontaktanschlussteils ein die Anschlussleitung umgebender Dichtstopfen zur Aufnahme der Durchgangsöffnung der Steckerverriegelung bzw. des Kontaktsteckers vorgesehen ist. Unbestückte Durchgangsöffnungen werden mittels Blind-Dichtstopfen abdichtend verschlossen. Insbesondere bei Vorsehen beider Dichtungstypen, d.h. der Umfangssichtung und der Dichtstopfen, wird eine vollständige Abdichtung des Kontaktanschlussbereichs bzw. des Anschlussraums zwischen dem Kontaktträger und dem Kontaktstecker in dem Dosengehäuse erreicht, auch wenn in den rückwärtigen, anschlussseitigen Teil der Steckdose Feuchtigkeit eintreten sollte.

Bei Vorsehen der Dichtstopfen in den Durchgangsöffnungen der Steckerverriegelung wird trotz der Schrägausrichtung der Durchgangsöffnungen (bezogen auf den Steckerträger) eine zuverlässige Abdichtung erreicht. Grund hierfür ist, dass der Bereich der Durchgangsöffnung, in welcher der Dichtstopfen anliegt, in der zweiten Verschiebeposition gerade zentriert über der Durchgangsöffnung in dem Steckerträger liegt, so dass das Kontaktanschlussteil in der zweiten Verschiebeposition mit seiner Längsachse im Wesentlichen parallel zu der Steckdosen-Axialrichtung bzw. der Axialrichtung der Durchgangsöffnungen des Steckerträgers ausgerichtet ist. Diese Ausrichtung ermöglicht auch das Aufstecken des Buchsenkontakts der Kontaktanschlussteile auf die Pins der Steckerkontakte an dem Kontaktträger. In dieser Position kann der vorzugsweise als Kreisscheibe mit Durchgangsöffnung für die Anschlussleitung ausgebildete Dichtstopfen mit seinen am Umfangsrand angeordneten Dichtlippen an der Innenwand der Durchgangsöffnung der Steckerverriegelung eine gute Abdichtwirkung erreichen, da die minimal ovale Form der im Vergleich zum Dichtstopfen schräg ausgerichteten Durchgangsöffnung durch die Elastizität des Dichtstopfens ausgeglichen wird. Dies wäre jedoch nicht der Fall, wenn die Durchgangsöffnung in der Steckerverriegelung im Bereich des Dichtstopfens nicht im Wesentlichen mit der Durchgangsöffnung in dem Steckerträger übereinstimmen würde.

Diese Anordnung der Durchgangsöffnung in der Steckerverriegelung definiert bei vorgegebener Länge des Kontaktanschlussteils, der Position des Dichtstopfens an dem Kontaktanschlussteil und dem vorgegebenen Verschiebeweg zwischen Steckerträger und Steckerverriegelung auch die Schrägstellung der Achse der Durchgangsöffnungen in der Steckerverriegelung, welche erfindungsgemäß gerade so eingestellt werden kann, dass die Mittelpunkte der Durchgangsöffnungen in dem Steckerträger und der Steckerverriegelung im Bereich des Dichtstopfens im Rahmen der erreichbaren Genauigkeit vorzugsweise koaxial angeordnet sind.

In Weiterbildung des erfindungsgemäß vorgeschlagenen Kontaktsteckers kann an dem Kontaktstecker, vorzugsweise an der Steckerverriegelung, eine Haltescheibe in bestückungsseitiger Richtung anschließend an die Umfangsdichtung festlegbar, insbesondere verschweißbar oder verrastbar, oder ggf. einteilig festgelegt sein, welche in radialer Richtung bspw. bezogen auf Achse des Kontaktsteckers über den Rand des Kontaktsteckers, insbesondere der Steckerverriegelung, und eine Montagefläche der Umfangsdichtung vorsteht, um die Umfangsdichtung seitlich zu führen, wobei die Haltescheibe die Umfangsdichtung in radialer Richtung jedoch nicht überragt. Haltescheibe und Steckerverriegelung können erfindungsgemäß auch einteilig ausgebildet sein.

Die Haltescheibe liegt vorzugsweise stirnseitig auf einem Montageabschnitt des Kontaktsteckers für die Umfangsdichtung auf, so dass eine sichere Fixierung der Umfangsdichtung und ein definierter Anschlagsrand für die Umfangsdichtung erreicht werden. Die Haltescheibe kann besonders einfach durch Ultraschall-Verschweißen mit dem Kontaktstecker bzw. der Steckerverriegelung verbunden werden oder einteilig an dem Kontaktstecker an dem Montageabschnitt für die Umfangsdichtung ausgebildet sein.

Das nachträgliche Anbringen der Haltescheibe hat den Vorteil, dass die eine Dichtfläche bildende Montagefläche der Steckerverriegelung ohne Grad ausgebildet werden kann. Dies erfordert, dass die Steckerverriegelung aus einer den gesamten Umfang überdeckenden Spritzgussform entformt werden kann, was durch die Haltescheibe zumindest erschwert wird.

Dies insbesondere dann, wenn die Haltescheibe erfindungsgemäß auch Rastelemente zur Verbindung des Kontaktsteckers mit dem Dosengehäuse aufweist. Als Rastelemente an der Haltescheibe können bspw. Rasthaken vorgesehen sein, welche in Rastöffnungen des Dosengehäuses eingreifen, die in an dem Dosengehäuse vorgesehenen Rastlaschen ausgebildet sein können. Erfindungsgemäß können diese Rastlaschen flexibel ausweichend ausgebildet sein, um ein Verrasten des Kontaktsteckers in dem Dosengehäuse zu ermöglichen. Durch eine auf das Dosengehäuse aufsteckbare Außenkappe kann im Montagezustand der Steckdosen ein solches Ausweichen der Rastlaschen verhindert werden, so dass auch der Kontaktstecker im Endmontagezustand der Steckdose auf den Steckkontakten des Kontaktträgers gesichert ist. Aufgrund des für die Haltscheibe verwendeten Materials und/oder der Konstruktion der Rasthaken sind diese vorzugsweise besonders biegesteif, so dass die Rasthaken aus den gesicherten Rastöffnungen nicht austreten können.

Gemäß einem weiteren Aspekt der vorliegenden Erfindung, der von den zuvor beschriebenen Merkmalen auch unabhängig ist, kann in der Steckdose ein Steckersensor zur Detektion anordenbar oder angeordnet sein, ob der Stecker des Anhängerstromkreises in die Einstecköffnung eingesteckt ist, wobei der Steckersensor als berührungslos arbeitender Magnetschalter ausgebildet ist, welcher die Annäherung eines Magneten an ein durch das Magnetfeld des Magneten schaltbaren Kontakt des Magnetschalters detektiert. Dieser Steckersensor mit dem berührungslos arbeitenden Magnetschalter hat den besonderen Vorteil, dass der Magnetschalter auch ohne eine mechanische Verbindung zu dem eingesteckten Stecker schalten kann, so dass keine Verbindung von dem Einsteckraum der Steckdose, in den grundsätzlich Feuchtigkeit eintreten kann, in den Anschlussbereich der Steckdose erfolgen muss, von dem die Signalleitungen des Steckersensors zu einer Auswerteeinheit weggeführt werden. Bei dem erfindungsgemäß vorgeschlagenen Steckersensor kann es sich um einen als Reed-Sensor oder Reed-Schalter bekannten Magnetschalter handeln, der durch einen an den Magnetschalter angenäherten Magneten geschaltet wird. Hierbei ist besonders vorteilhaft, wenn der Magnetschalter bestückungsseitig an der Steckdose festgelegt wird und der Magnet derart in dem Einsteckraum bzw. der Einstecköffnung angeordnet ist, dass er bei dem Einstecken des Steckers in Richtung des Magnetschalters bewegt wird und ein Umschalten des Magnetschalters bewirkt.

Eine hierfür besonders bevorzugte Ausführungsform sieht vor, dass der Magnet in einer auf dem Boden der zwischen dem Dosengehäuse und dem Kontaktträger ausgebildeten Einstecköffnung angeordneten Dichtung aufnehmbar bzw. genommen ist, welche beim Einstecken des Steckers durch die Stirnwand des Steckers auf den Boden des Einsteckraums gedrückt wird. Der Magnetschalter ist dann an der dem Magnet gegenüberliegenden Seite des Bodens des Einsteckraums in dem Dosengehäuse festgelegt, und zwar vorzugsweise derart, dass das Annähern des Magneten an den Boden des Einsteckraums beim Einstecken des Steckers in die Steckdose den Magnetschalter schaltet.

Der Magnetschalter ist vorzugsweise an der Außenseite des den Anschlussraum bildenden Teils des Dosengehäuses, d.h. an der Außenseite der Anschlussraumwandung, angeordnet, bspw. durch Einstecken in einer Führungsöffnung. In dieser Führungsöffnung kann der vorzugsweise stabförmig ausgebildete Magnetschalter, der einen schaltbaren Kontakt vorzugsweise in der Nähe der dem Magnet zugewandten Stirnseite aufweist und an der dieser Stirnseite gegenüberliegenden Stirnseite die Signalleitungen wegführt, durch einen Haltevorsprung gesichert werden, der insbesondere an dem Kontaktstecker vorgesehen ist, vorzugsweise an der Haltscheibe gemeinsam mit den anderen Rastelementen zum Festlegen des Kontaktsteckers in dem Dosengehäuse. Dies hat zur Folge, dass nach dem Festlegen bzw. Verrasten des Kontaktsteckers in dem Dosengehäuse auch der Haltvorsprung gegen die Stirnseite des Magnetschalters drückt, aus welcher insbesondere die Kabel austreten können. So wird der Magnetschalter bei der Montage ohne einen weiteren Arbeitsschritt in der Führungsöffnung mit fixiert.

Die Dichtung ist erfindungsgemäß vorzugsweise aus einem elastischen Material, bspw. einem Elastomere, derart geformt, dass ohne Krafteinwirkung des Steckers auf die Dichtung ein Hohlraum zumindest zwischen dem den Magneten tragenden Abschnitt der Dichtung und dem Boden der Einstecköffnung verbleibt. In dieser Position ist der Magnet von dem Magnetschalter so weit entfernt, dass keine Schaltwirkung in dem Magnetschalter eintritt. Wenn der Stecker des Anhängerstromkreises in die Kraftfahrzeugsteckdose und damit in deren Einstecköffnung eingesteckt wird, drückt die Stirnseite des Steckers auf die Dichtung und verformt diese derart, dass der Magnet in der Dichtung in Richtung des Hohlraums gedrückt wird und die Dichtung im Bereich des Magneten vorzugsweise fest auf dem Boden der Einstecköffnung aufliegt. In dieser Position ist der Magnet dem Magnetschalter soweit angenähert, dass der Magnetschalter schaltet und auf diese Weise das Einstecken des Steckers detektierbar ist.

Diese Information kann von Steuergeräten in dem Fahrzeug ausgewertet und geeignet verwendet werden, bspw. um bestimmte Funktionen in dem Fahrzeug zu aktivieren oder zu deaktivieren.

Diese erfindungsgemäß vorgeschlagene Verwendung eines berührungslos arbeitenden Steckersensors hat den Vorteil, dass mechanisch keine Verbindung zu dem Schalter des Steckersensors bestehen muss, so dass der elektrisch arbeitende Teil des Steckersensors, d.h. der Magnetschalter, von dem Einsteckbereich der Steckdose für den Stecker baulich getrennt werden kann und somit keine Gefahr besteht, dass Feuchtigkeit in den elektrischen Anschlussbereich der Steckdose gelangt. Außerdem arbeitet ein Magnetschalter über seine gesamte Lebensdauer sehr zuverlässig. Dies ist bei mechanisch arbeitenden Schaltern, bei denen bspw. ein Stößel in die Einstecköffnung der Steckdose hineinragt, nicht der Fall, da dieser Stößel oder seine Führung aufgrund eines häufigen Gebrauchs mechanisch verschleißen kann. Der vorgeschlagene Steckersensor erlaubt daher eine bessere Abdichtung der Steckdose und ist zudem betriebssicherer.

In Weiterbildung dieses Erfindungsgedankens kann vorgesehen sein, dass die Dichtung auf dem Boden der Einstecköffnung als ringförmige Flachdichtung ausgebildet ist, welche zumindest in dem den Magneten tragenden Abschnitt doppelwandig aufgebaut ist und eine Einfügeöffnung an dem nach außen weisenden seitlichen Rand der Dichtung aufweist. Diese Einfügeöffnung ist vorzugsweise kleiner als der Magnet, so dass sich die Einfügeöffnung bzw. die Dichtung beim Einschieben des Magneten in die Dichtung elastisch verformt und nach Aufnahme des Magneten in dem sich an die Einfügeöffnung anschließenden Magnetaufnahmeraum der Magnet sicher in der Dichtung gehalten ist. Diese Montage für den Magneten ist besonders einfach, da der Magnet nicht bereits bei der Herstellung der Dichtung in die Dichtung aufgenommen werden muss und ggf. weitere Fehlerelemente vorzusehen sind. Dies vereinfacht auch die Montage und Herstellung der erfindungsgemäßen Steckdose. Insgesamt wird durch den vorgeschlagenen berührungslos arbeitenden Sensorstecker somit ein großer Vorteil bezüglich der Dichtheit, der Robustheit und der Dauerhaftigkeit in der Schaltwirkung erreicht.

Ein weiterer besonders vorteilhafter Effekt der vorgeschlagenen Erfindung, welcher auch unabhängig von zuvor beschriebenen Merkmalen Gegenstand der Erfindung ist, sieht vor, dass das Dosengehäuse in einem Abschnitt mit dem größten Außendurchmesser hohlzylinderförmig ausgebildet ist, wobei der Abschnitt mit dem größten Außendurchmesser die Einheit aus Kontaktträger und Kontaktstecker und/oder den Kontaktstecker mit den darin eingesetzten Kontakten und den in den Anschlussraum der Steckdose hineinragenden Steckkontakten (der Kontakte) in bestückungsseitiger Richtung der Steckdose nicht überragt. Ferner kann vorgesehen sein, dass an dem Dosengehäuse ein sich bestückungsseitig erstreckender Befestigungsabschnitt festgelegt ist, der in Radialrichtung bezogen auf die Mittelachse des hohlzylinderförmigen Dosengehäuses nicht über den Abschnitt des Dosengehäuses mit dem größten Außendurchmesser vorsteht. Dieser gemäß einem weiteren Aspekt dieses erfindungsgemäßen Gedankens vorgesehene Befestigungsabschnitt dient dem Festlegen einer Außenkappe an der Steckdose. Dazu kann der Befestigungsabschnitt Einkerbungen in einem bestimmten Winkelabstand, vorzugsweise in einem 30°-Abstand aufweisen, der mit Montagevorsprüngen für mögliche Montagepositionen in der Außenkappe zusammenwirkt, die von der Außenkappe geeignet vorstehen, um in die Einkerbungen des Befestigungseinschnitts einzugreifen. Einkerbungen und Vorsprünge können erfindungsgemäß auch umgekehrt vorgesehen sein.

Sofern erfindungsgemäß ein Magnetschalter als berührungslos arbeitender Steckersensor vorgesehen ist, tritt dieser vorzugsweise durch den Befestigungsabschnitt hindurch, wozu auch die Führungsöffnung für den Magnetschalter, die hohlzylinderförmig ausgebildet sein kann, den Befestigungsabschnitt durchstößt.

In dieser Ausgestaltung der Erfindung wird auch im Bereich des Anschlussraums der Steckdose eine besonders kompakte Bauform erreicht, wobei die Steckdose und das Dosengehäuse vorzugsweise einteilig in einem Spritzgussverfahren und in einem Spritzgussschritt hergestellt sind. Dabei ist zwischen einer Innenwandfläche des Dosengehäuses und einer Außenwandfläche des Kontaktträgers eine bestückungsseitig durch einen auch als Boden bezeichneten Steg geschlossene Nut zur Bildung der Einstecköffnung ausgebildet, auf welcher die bereits beschriebene Dichtung (mit oder ohne eingestecktem Magnet), je nach Ausführungsform, auflegbar ist.

In Weiterbildung der Erfindung kann vorgesehen sein, dass die Anschlussraumwandung an ihrem bestückungsseitigen Rand eine bzw. die als Innenumfangsfläche ausgebildete Dichtfläche zum Zusammenwirken mit der Umfangsdichtung des Kontaktsteckers ausbildet, wobei die Umfangsdichtung an der Innenumfangsfläche vorzugsweise mittels Dichtlippen anliegt, und/oder dass an der Stirnseite des bestückungsseitigen Rands der Anschlussraumwandung sich bestückungsseitig erstreckende Rastlaschen erstrecken, an welchen der Kontaktstecker verrastbar ist. Vorzugsweise weisen die Rastlaschen hierzu Rastöffnungen auf, in die Rasthaken des Kontaktsteckers einrastbar sind. Die Rastlaschen sind seitlich, d.h. in Radialrichtung bezogen auf die Mittelachse des Dosengehäuses, ausweichend ausgebildet und können erfindungsgemäß einen vorzugsweise radial auswärts gerichteten Stützvorsprung zum Abstützen an einer auf das Dosengehäuse bzw. den Befestigungsabschnitt aufgesetzten Außenkappe aufweisen.

Um die Montagefreundlichkeit der Steckdose zu verbessern und die Gefahr einer Fehlmontage zu reduzieren, kann erfindungsgemäß an der Innenwandfläche der Anschlussraumwandung ein Kodiervorsprung ausgebildet sein, welcher das Einstecken des Kontaktsteckers nur in der zweiten Verschiebeposition von Steckerträger und Steckerverriegelung erlaubt. Hierdurch wird verhindert, dass die Sekundärverriegelung nicht wirkt, wenn der Kontaktstecker in den Anschlussraum der Steckdose eingesteckt wird.

Der vorgesehene Kodiervorsprung liegt vorzugsweise auf der Innenumfangsfläche der Anschlussraumwandung bzw. ist dort ausgebildet.

Weiterhin kann, auch unabhängig von den vorbeschriebenen Merkmalen, gemäß einem weiteren unabhängigen Aspekt der Erfindung an der Steckdose in bestückungsseitiger Richtung eine Außenkappe festlegbar bzw. festgelegt sein, welche den Anschlussraum abdeckt und aus der durch eine an der Außenkappe festlegbare Tülle die Anschlussleitungen sowie ggf. die Signalleitungen des Magnetschalters und/oder einer in der Steckdose vorgesehenen optischen Signaleinrichtung ausführbar sind, wobei die Tülle vorzugsweise an einem abgeschrägten Abschnitt der Außenkappe festgelegt ist. Der abgeschrägte Abschnitt der Außenkappe verbindet vorzugsweise die bestückungsseitige Stirnfläche der Außenkappe und einen Abschnitt der Umfangsfläche der Außenkappe in einem Winkel von etwa 45°. Diese Ausführung ist besonders geeignet, da sie sowohl eine axiale als auch eine radiale Ausführung der Anschlussleitungen, ggf. zusammen mit den Signalleitungen, sowohl in axialer Richtung als auch in radialer Richtung als auch in zwischen diesen beiden Bereichen liegenden Zwischenwinkeln durch Drehen und/oder Verbiegen der Tülle erreicht.

In einer besonders bevorzugten Ausgestaltung der erfindungsgemäß vorgesehenen Außenkappe ist in den Umfangsrand der Außenkappe ein vorzugsweise innen in der Außenkappe liegendes Filmscharnier zum Auf- und Zuklappen der Außenkappe vorgesehen, so dass der Umfangsrand der Außenkappe an dem Filmscharnier auf- und zuklappbar ist. Ferner ist an den Stoßseiten des Umfangsrandes der durch das Filmscharnier verbundenen Hälften der Außenkappe sowie vorzugsweise auch der Stirnseite ein Rastmechanismus vorgesehen, um die beiden auf- und zuklappbaren Hälften der Außenkappe sicher aneinander festzulegen. Die Stoßseiten des Umfangsrandes und der bestückungsseitigen Stirnseite der Hälften der Außenkappe sind die Stoßseiten, an denen die Hälften der Außenkappe beim Zusammenklappen zusammenstoßen.

Vorzugsweise sind alle Stoßseiten durch eine innen liegende Spritzschutzlasche geschützt, welche vorzugsweise an der einen Stoßseite angeordnet ist und im zugeklappten Zustand die andere Stoßseite hintergreift. Eine derartige Außenkappe ist einfach montierbar, wobei vorgesehen sein kann, dass sich der Rastmechanismus nach Schließen der Außenkappe nicht mehr zerstörungsfrei öffnen lässt. Gleichzeitig ist durch die Spritzschutzlasche das Eindringen von Feuchtigkeit in den Rückraum der Steckdose auch bspw. in Waschstraßen oder beim Abspritzen des Kraftfahrzeugs minimiert.

Ein weiterer erfindungsgemäß auch eigenständigerer Aspekt der Erfindung sieht vor, dass eine optische Signaleinrichtung zum Anzeigen eines außerhalb der Steckdose detektierten Zustands in einem Trägerelement für den Deckel angeordnet ist, welches Trägerelement die Schwenkachse des Deckels trägt. Auch dieser Aspekt der Erfindung ist unabhängig von dem zuvor beschriebenen Merkmalen und Aspekten der erfindungsgemäßen Steckdose.

Eine derartige Signaleinrichtung kann verwendet werden, um bestimmte Zustände des Fahrzeugs und/oder des Anhängers beim Einstecken des Fahrzeugs anzuzeigen, die bspw. für das Fahren des Fahrzeugs mit Anhänger relevant sind. Die Signalleitungen zu der optischen Signaleinrichtung können dabei vorzugsweise zusammen mit den Anschlussleitungen zu den Kontakten sowie ggf. den Signalleitungen zu dem Magnetschalter geführt werden. Hierfür ist es besonders vorteilhaft, wenn die optische Signaleinrichtung mit der Signalleitung fest verbunden ist und eine unverlierbare Baueinheit bildet. Dann kann das Trägerelement vorzugsweise eine auf der dem Deckel gegenüber liegenden Seite offene Ausnehmung zur Aufnahme der Baueinheit aus optischer Signaleinrichtung und Signalleitung im Anschlussbereich aufweisen, wobei die optische Signaleinrichtung aus einer Öffnung in dem Trägerelement in Richtung des Deckels oder in Richtung der Schwenkachse des Deckels herausragt. Dadurch ist die Signaleinrichtung gut von außen sichtbar, ohne dass eine gesondert anzubringende Baueinheit zum Festlegen der Signaleinrichtung an der Steckdose notwendig wäre.

Vorzugsweise weist das Dosengehäuse in seiner Außenwand im Anschluss an die Ausnehmung in dem Trägerelement eine Nut auf, in welche die ggf. in einem Dichtelement geführte Signalleitung geführt ist, wobei sich die Nut bis zu dem dem Deckel gegenüberliegenden rückwärtigen Ende des Dosengehäuses bzw. des Bereichs des Dosengehäuses mit dem größten Außendurchmesser erstreckt, so dass die Signalleitung unmittelbar in den von der Außenkappe der Steckdose ummantelten Bereich eingeführt werden kann.

Weitere Vorteile, Merkmale und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: einen Querschnitt durch eine erfindungsgemäße Steckdose;
- Fig. 2: eine Explosionszeichnung der erfindungsgemäßen Steckdose mit den wesentlichen Bauteilen;
- Fig. 3: eine Schnittdarstellung entsprechend Fig. 1 mit einem Teil der erfindungswesentlichen Merkmale der Steckdose;
- Fig. 4: einen Kontakt der Steckdose;
- Fig. 5: ein Kontaktanschlussteil mit Dichtstopfen der Steckdose;
- Fig. 6: eine Schnittdarstellung durch einen erfindungsgemäßen Kontaktstecker in einer zweiten Verschiebeposition;
- Fig. 7: einen Schnitt durch einen erfindungsgemäßen Kontaktstecker in einer ersten Verschiebeposition;
- Fig. 8: eine teilgeschnittene Seitendarstellung des erfindungsgemäßen Kontaktsteckers;
- Fig. 9: eine dreidimensionale Ansicht des erfindungsgemäßen Kontaktsteckers;
- Fig. 10: eine dreidimensionale Ansicht der erfindungsgemäßen Steckdose mit aufgesetzter und geöffneter Außenkappe (ohne Tülle);
- Fig. 11: eine teilweise geschnittene Seitenansicht der erfindungsgemäßen Steckdose;
- Fig. 12: eine teilweise geschnittene Seitenansicht der erfindungsgemäßen Steckdose, die gegenüber der Darstellung in Fig. 11 gedreht ist, und
- Fig. 13: eine dreidimensionale Ansicht der erfindungsgemäßen Steckdose ohne Außenkappe und Tülle.

Nachfolgend wird mit Bezug auf die Zeichnung eine besonders bevorzugte Ausführungsform der erfindungsgemäßen Steckdose beschrieben, in welcher alle zuvor erwähnten erfindungsgemäßen Aspekte verwirklicht sind, wobei eine auch Steckdose mit einem oder mehreren der zuvor erwähnten Aspekte, unabhängig von den anderen Aspekten, eine erfindungsgemäße Steckdose darstellt. Daher sind in der nachfolgenden Beschreibung eigenständig dargestellte Teilaspekte auch unabhängig voneinander zu verstehen.

Aufgrund des großen Detailreichtums der Zeichnungen wird ferner darauf verzichtet, in allen Zeichnungen alle Bezugszeichen anzubringen, um die Lesbarkeit der Zeichnungen zu verbessern, wobei insbesondere die Bezugszeichen in eine Zeichnung eingebracht sind, die bei der Erläuterung der Zeichnung Verwendung finden.

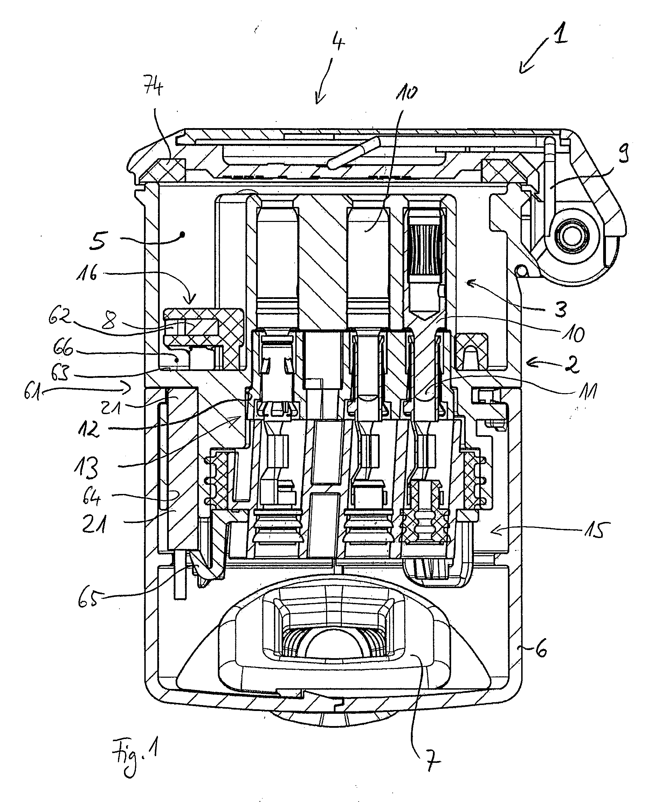

Fig. 1 zeigt eine erfindungsgemäße Steckdose 1 eines Kraftfahrzeugs für die Aufnahme eines nicht dargestellten Steckers eines Anhängerstromkreises zur Anbindung an das elektrische System des Kraftfahrzeugs. Die Steckdose 1 weist ein an dem Kraftfahrzeug festlegbares Dosengehäuse 2 sowie einen einteilig mit dem Dosengehäuse 2 verbundenen Kontaktträger 3 auf, der häufig auch als Kontakteinsatz bezeichnet wird. Von dem Kontaktträger 3 sind nicht dargestellte Anschlussleitungen an das elektrische System des Kraftfahrzeugs wegführbar.

Ferner weist die erfindungsgemäße Steckdose 1 einen an das Dosengehäuse 2 angelenkten Deckel 4 zum abdichtenden Verschließen einer auch als Einsteckraum bezeichneten Einstecköffnung 5 auf, in welche der Stecker des Anhängerstromkreises bei geöffnetem Deckel 4 eingesteckt wird.

Rückwärtig ist an dem Dosengehäuse 2 der Steckdose 1 eine Außenkappe 6 angeordnet, in welche eine Tülle 7 zum Ausführen der nicht dargestellten Anschlussleitungen eingesetzt ist.

Die Einstecköffnung 5 ist im Nicht-Gebrauchsfall der Steckdose 1 also durch den Deckel 4 geschlossen, in welchem sich eine Deckeldichtung 74 befindet, die mit der die Einstecköffnung 5 umschließenden Stirnseite der Wand des Dosengehäuses 2 abdichtend zusammenwirkt, wobei der Deckel 4 durch eine Deckelfeder 9 in die in Fig. 1 dargestellte Schließrichtung des Deckels 4 vorgespannt ist.

In den Kontaktträger 3 sind auch als Kontakthülse oder Anschlusskontakt bezeichnete Kontakte 10 aufgenommen, von denen in Fig. 1 der rechts in dem Kontaktträger 3 dargestellte Kontakt 10 geschnitten dargestellt ist. An der dem Deckel 4 bzw. der Einstecköffnung 5 zugewandten Seite des Kontakts 10, d.h. dem eingangsseitigen bzw. anschlussseitigen Teil des Kontaktes 10, ist ein Buchsenabschnitt (Buchsenkontakt) zur Aufnahme eines Pins des Steckers des Anhängerstromkreises ausgebildet. Auf dem dem anschlussseitigen Ende des Kontaktes 10 gegenüberliegenden bestückungsseitigen Ende des Kontaktes 10 weist der Kontakt 10 einen als Pin-Steckkontakt ausgebildeten Steckkontakt 11 auf, der aus dem Kontaktträger 3 in einen Anschlussraum 12 der Steckdose 1 hineinragt. In diesen Anschlussraum 12 der Steckdose 1 ist ein Kontaktstecker 13 eingesteckt, in welchem als Buchsenkontakte ausgebildete Kontaktanschlussteile 14 zum Anschließen der Anschlussleitungen an die Kontaktanschlussteile 14 und über die Kontaktanschlussteile 14 an die Kontakte 10 aufgenommen sind. Die Kontaktanschlussteile 14 sind mir ihrem Buchsenkontakt auf den Steckkontakt 11 des Kontaktes 10 aufgesteckt. Der Kontaktstecker 13 ist über eine Rastverbindung 15 an dem Dosengehäuse 2 festgelegt.

Ferner ist in die Einstecköffnung 5 eine Dichtung 16 aufgenommen, die auf dem Boden 63 der Einstecköffnung 5 angeordnet ist und mit einer Stirnseite des in die Einstecköffnung 5 eingesteckten Steckers des Anhängerstromkreises zusammenwirkt, um die Kontaktierung des Steckers mit dem Kontaktträger 3 im Gebrauchsfall bei geöffnetem Deckel 4 abzudichten.

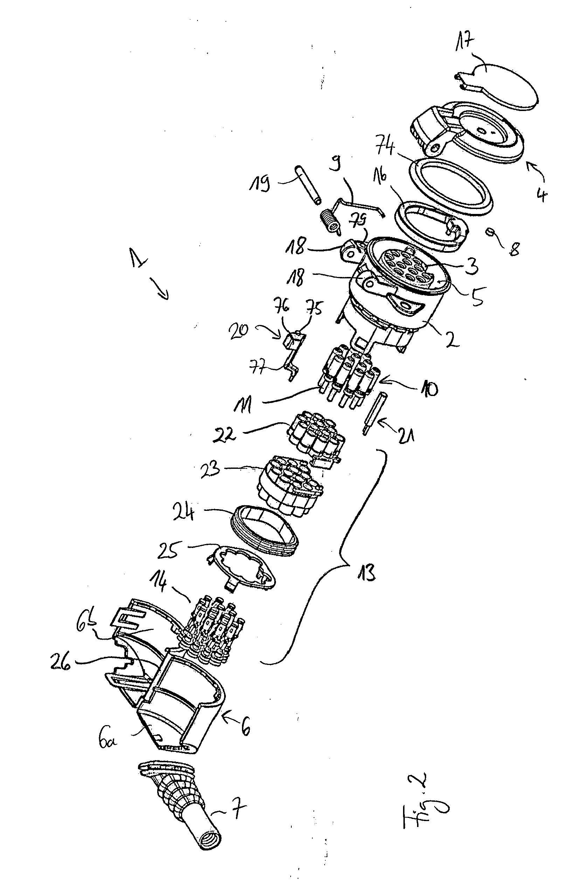

Der Übersichtlichkeit halber sind in Fig. 2 wesentliche oder für die Funktion der Steckdose 1 interessante Bestandteile in einer Explosionsdarstellung gezeigt, die nachfolgend kurz identifiziert werden sollen und sich, auch wenn sie nicht gesondert erwähnt wurden, auch in der Darstellung gemäß Fig. 1 zeigen.

In den Deckel 4 der Steckdose 1, der außenseitig durch eine Deckelkappe 17 abgedeckt ist, ist die Deckeldichtung 74 aufgenommen. In die Einstecköffnung 5 des Dosengehäuses 2 ist die ringförmig ausgebildete Dichtung 16 eingelegt, in welche zuvor ein Magnet 8 eingesteckt wurde, dessen Funktion später noch erläutert wird. Außen an dem Dosengehäuse sind zwei Trägerelemente 18 angeordnet, welche die Schwenkachse 19 des Deckels 4 tragen, an welcher die Deckelfeder 9 festgelegt ist.

In den einteilig mit dem Dosengehäuse 2 in einem Spritzgussverfahren, vorzugsweise in einem Spritzgussschritt, hergestellten und verbundenen Kontaktträger 3 sind bis zu dreizehn Kontakte 10 mit bestückungsseitig vorstehenden Steckkontakten 11 eingesteckt. Ferner ist in ein Trägerelement 18 des Dosengehäuses 2 eine optische Signaleinrichtung 20 eingesetzt, die auch später noch ausführlicher erläutert wird. Gleiches gilt für einen mit dem Magnet 8 zusammenwirkenden Magnetschalter 21, der seitlich an dem Dosengehäuse 2 in einem von der Außenkappe 6 umgebenen Bereich angeordnet ist (vgl. Fig. 1). Der in den Anschlussraum 12 der Steckdose 1 aufgenommene und auf die Steckkontakte 11 aufgesteckte Kontaktstecker 13 ist mehrteilig aufgebaut und weist einen Steckerträger 22, eine Steckerverriegelung 23, eine Umfangsdichtung 24, eine Haltescheibe 25 und in den Steckerträger 22 und die Steckerverriegelung aufnehmbare Kontaktanschlussteile 14 auf. Die an dem bestückungsseitigen Ende der Steckdose 1 festlegbare Außenkappe 6 weist erfindungsgemäß zwei Kappenhälften 6a, 6b auf, die über ein Filmscharnier 26 klappbar aneinander festgelegt sind. Beim Zusammenklappen der Außenkappe 6 bzw. der Kappenhälften 6a, 6b kann die Tülle 7 in der Außenkappe 6 festgelegt werden.

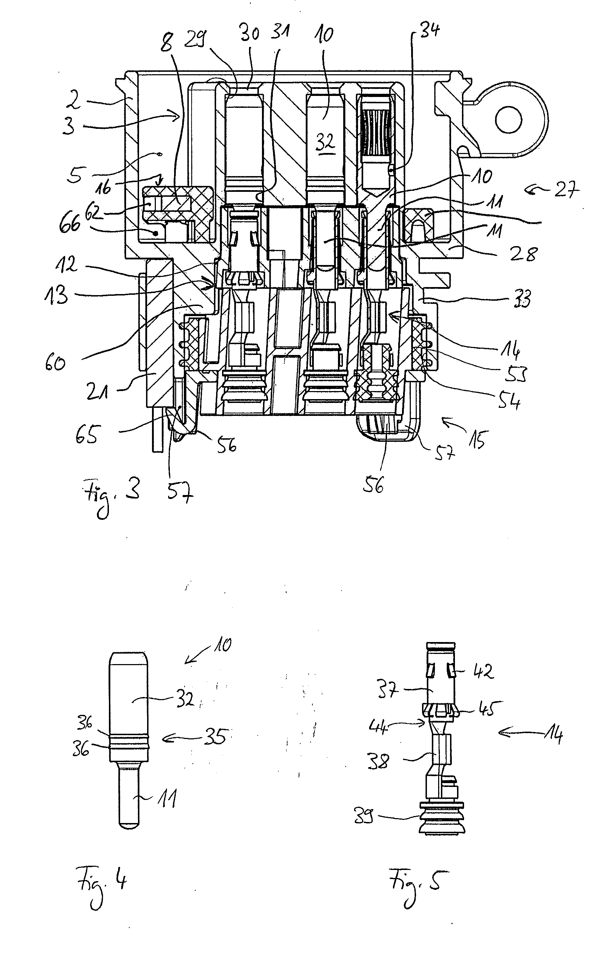

In der Schnittzeichnung gemäß Fig. 3 sind das Dosengehäuse 2 mit dem Kontaktträger 3 und dem Anschlussraum 12 als Ausschnitt der Fig. 1 noch einmal dargestellt, wobei in dem Anschlussraum 12 der Kontaktstecker 13 aufgenommen ist.

Das Dosengehäuse 2 ist in einem Abschnitt 27 mit dem größten Außendurchmesser hohlzylinderförmig ausgebildet. Dieser Abschnitt 27 umschließt den in seinem Inneren aufgenommenen bzw. ausgebildeten Kontaktträger 3. An dem der durch den Deckel 4 verschließbaren Einstecköffnung 5 gegenüberliegenden (bestückungsseitigen) Ende des Abschnitts 27 mit dem größten Außendurchmesser sind das Dosengehäuse 2 und der Kontaktträger 3 über einen den Boden 63 des Einsteckraums 5 bildenden Stegs 28 verbunden, wobei der Steg 28 in einer Abwinkelung einteilig in den Außenumfangsbereich des Kontaktträgers 3 übergeht. Der Steg 28 ist auch Teil des Dosengehäuses 2.

In dem Kontaktträger 3 sind als Durchgangsöffnungen 29 ausgebildete Kontaktkammern vorgesehen, welche die Kontakte 10 aufnehmen. Die Durchgangsöffnungen 29 erstrecken sich in axialer Richtung der Steckdose 1, die mit der Einsteckrichtung des Steckers des Anhängerstromkreises zusammenfällt. In dem die Durchgangsöffnungen 29 umgebenden Kontaktträgerköper des Kontaktträgers 3 münden die Durchgangsöffnungen 29 in eine einsteckseitige Öffnung 30 zur Aufnahme der Gegenkontakte des Anhängerstromkreis-Steckers und eine bestückungsseitige Öffnung 31, durch welche der Kontakt 10 in den Kontaktträger 3 eingesteckt bzw. eingepresst werden kann.

Die Kontakte 10 sind einsteckseitig als Buchsenkontakte mit einer äußeren zylindrischen Mantelfläche 32 ausgebildet, wie auch in Fig. 4 zu erkennen ist. Von der zylindrischen Mantelfläche 32 steht an dem der Einsteckseite gegenüberliegenden (bestückungsseitigen) Ende der zylindrischen Mantelfläche 32 in axialer Richtung mittig von der Grundfläche der zylindrischen Mantelfläche 32 der als Pin ausgebildete Steckkontakt 11 vor, der nach Aufnahme des Kontakts 10 in den Kontaktträger 3 aus der bestückungsseitigen Öffnung 31 des Kontaktträgers 3 heraussteht, wobei die Steckkontakte 11 in bestückungsseitiger Richtung der Steckdose bis über den Steg 28 des Dosengehäuses 2 vorstehen, welcher Steg 28 den Abschnitt 27 des Dosengehäuses 2 mit den größten Außendurchmesser bestückungsseitig begrenzt.

Die Steckkontakte 11 befinden sich also in dem sich an den Kontaktträger 3 bestückungsseitig anschließenden Anschlussraum 12 der Steckdose 1, der in bestückungsseitiger Richtung durch den abgewinkelten Bereich des Stegs 28 und eine sich von dem Steg 28 im Wesentlichen in axialer Richtung der Steckdose 1 erstreckenden Anschlussraumwandung 33 des Dosengehäuses 2 gebildet wird. Auch die Anschlussraumwandung 33 ist im Wesentlichen hohlzylinderförmig ausgebildet, wobei die Anschlussraumwandung 33 abschnittsweise verschiedene Innendurchmesser des Anschlussraums 12 ausbildet. Der Außendurchmesser der Anschlussraumwandung 33 des Dosengehäuses 2 ist kleiner als der Außendurchmesser des Abschnitts 27 mit dem größten Außendurchmesser des Dosengehäuses 2.

Die axiale Länge der zylindrischen Mantelfläche 32 des Kontaktes 10 entspricht der Länge der Durchgangsöffnung 29 in dem Kontaktträger 3 bis zu der einsteckseitigen Öffnung 30 mit gegenüber der Durchgangsöffnung 29 vermindertem Innendurchmesser, so dass der Kontakt 10 beim Einstecken in den Kontaktträger 3 bzw. eine seiner Durchgangsöffnungen 29 mit seiner einsteckseitigen Stirnseite an die einsteckseitige Öffnung 30 des Kontaktträgers 3 anstößt. Das bestückungsseitige Ende der zylindrischen Mantelfläche 32 kommt vorzugsweise im Wesentlichen bündig mit der bestückungsseitigen Öffnung 31 des Kontaktträgers 3 zu liegen.

Gemäß einem wesentlichen Aspekt der vorliegenden Erfindung entspricht der Innendurchmesser der Durchgangsöffnung 29 in dem Kontaktträger 3 dem Außendurchmesser der zylindrischen Mantelfläche 32, so dass der Kontakt 10 ohne radiales Spiel in die Durchgangsöffnung 29 des Kontaktträgers 3 einschiebbar ist. Zwischen einer Spülöffnung 34 des Buchsenabschnitts des Kontakts 10 (Buchsenkontakt) und dem bestückungsseitigen Ende der zylindrischen Mantelfläche 32 des Kontakts 10 ist ein Tannenbaum- bzw. Dornprofil 35 ausgebildet, das in Fig. 4 deutlich zu erkennen und mit Bezugszeichen versehen ist. In Fig. 3 ist dieses Dornprofil 35 zwar auch zu erkennen, jedoch der Übersichtlichkeit halber nicht mit Bezugszeichen versehen.

Das Tannenbaum- bzw. Dornprofil 35 besteht aus zwei dreieckförmigen Nasen 36, die seitlich von der zylindrischen Mantelfläche 32 des Kontakts 10 vorstehen, wobei die Spitze der dreieckförmigen Nase 26 in Richtung der Einsteckseite des Kontakts 10 weist. Dies gilt für beide in Axialrichtung nacheinander angeordnete Nasen 36 des umfangsseitig um den Kontakt 10 umlaufenden Dornprofils 35.

Weil das Dornprofil 35 von der zylindrischen Mantelfläche 32 nach außen radial vorsteht und der Innendurchmesser der Durchgangsöffnung 29 (Kontaktkammer des Kontaktträgers 3) dem Außendurchmesser der zylindrischen Mantelfläche 32 entspricht, pressen sich die Nasen 36 des Dornprofils 35 beim Einstecken des Kontakts 10 in die Durchgangsöffnung 29 in die Innenwandung der Durchgangsöffnung 29 ein, wobei aufgrund der in Richtung der einsteckseitigen Öffnung 31 dreiecksförmig zulaufenden Nasen 36 die Kontakte 10 durch diese Verpressung fest in dem Kontaktträger 3 fixiert sind und die beim Einstecken des Steckers in die Steckdose 1 auftretenden Einsteckkräfte aufnehmen. Die Kontakte 10 können bereits herstellungsseitig in die Steckdose 1 bzw. den Kontaktträger eingepresst werden, so dass diese Arbeit nicht durch den Konfektionär bei der Vorbereitung der Steckdose 1 und des Kabelbaums zur Montage in dem Kraftfahrzeug vorgenommen werden muss.

Das Einpressen des Dornprofils 35 in die Innenwand der Durchgangsöffnung 29 hat den weiteren erfindungswesentlichen Vorteil, dass der Kontakt über seinen gesamten Umfangsrand mit einer Anpresskraft an der Innenwand der Durchgangsöffnung 29 anliegt und hierdurch nicht nur einen zuverlässigen kraft- und formschlüssigen Halt erzeugt, sondern gleichzeitig eine Abdichtung zwischen dem Kontakt 10 und der Durchgangsöffnung 29 herstellt. Da der Kontaktträger 3 und das Dosengehäuse 2 in seinem Abschnitt 27 mit dem größten Durchmesser einteilig durch den Steg 28 verbunden sind, ist die Einstecköffnung 5 der Steckdose 1 nach dem Einpressen der Kontakte 10 mit dem Dornprofil 35 somit vollständig abgedichtet. Feuchtigkeit kann aus der Einstecköffnung 5 daher nicht in den Anschlussraum 12 der Steckdose 1 eindringen, in dem die Kontakte 10 über die in dem Kontaktstecker 13 angeordneten Kontaktanschlussteile 14 oder auf andere Weise mit nicht dargestellten Anschlussleitungen zum Anschließen der Kontakte 10 an den Stromkreis des Kraftfahrzeugs verbunden werden.

Diese Verbindung erfolgt gemäß einem weiteren, erfindungsgemäß unabhängigen Aspekt der vorliegenden Erfindung durch den Kontaktstecker 13, der auf die Steckkontakte 11 aufgesteckt und in dem Anschlussraum 12 an dem Dosengehäuse 2 festgelegt wird. Dazu ist in dem Kontaktstecker 13 ein Kontaktanschlussteil 14 aufgenommen, das in Fig. 5 genauer zu erkennen ist. Dieses Kontaktanschlussteil 14 weist einen Buchsenkontakt 37 zum Aufstecken auf den Steckkontakt 11 des Kontaktes 10 und einen Crimp-Kontaktanschluss 38 auf, an welchem eine nicht dargestellte Anschlussleitungen durch Vercrimpen festgelegt werden kann. Die Anschlussleitung wird dazu durch einen an dem bestückungsseitigen Ende des Kontaktanschlussteils 14 angeordneten Dichtstopfen 39 mit axialer Öffnung abdichtend durchgeführt, wobei der Dichtstopfen 39 an dem Crimp-Kontaktanschluss 38 gehalten ist. Die Durchgangsöffnung des Dichtstopfens 39 ist in dem rechts in Fig. 3 geschnitten dargestellten Kontaktanschlussteil 14 zu erkennen, auch wenn der Dichtstopfen 39 dort der Übersichtlichkeit halber nicht mit einem Bezugszeichen versehen ist.

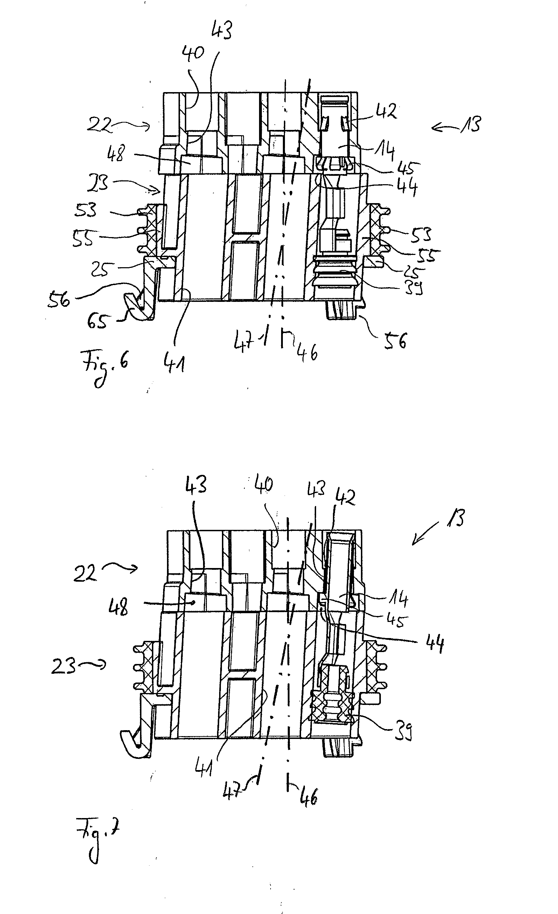

Das Kontaktanschlussteil 14 ist in dem Kontaktstecker 13 festgelegt, der nachfolgend mit Bezug auf Fig. 6 und 7 näher erläutert wird. Der Kontaktstecker 13 ist aus einem Steckerträger 22 und einer Steckerverriegelung 23 aufgebaut, welche jeweils Durchgangsöffnungen 40, 41 aufweisen, in welche das Kontaktanschlussteil 14 eingesteckt bzw. aufgenommen ist. Dabei ist in dem Steckerträger 22 eine Primärverriegelung des Kontaktanschlussteils 14 und durch die Steckerverriegelung 23 eine Sekundärverriegelung des Kontaktanschlussteils 14 vorgesehen, welche eine axiale Verschiebung des Kontaktanschlussteils 14 in dem Kontaktstecker 13 verhindern. An dem Buchsenkontakt 37 des Kontaktanschlussteils 14 mit einem zylinderförmigen Mantelabschnitt sind federnde Rastlaschen 42 ausgebildet, die sich beim Durchstecken durch eine Öffnung mit einem dem Außendurchmesser des Buchsenkontakts 37 entsprechenden Innendurchmesser an die Mantelfläche des Buchsenkontakts 37 anlegen und nach Durchtritt durch eine solche Öffnung wieder nach außen abstehen. Entsprechend weist die Durchgangsöffnung 40 des Steckerträgers 22 in einem axial mittleren Abschnitt einen Rastvorsprung 43 auf, dessen Innendurchmesser im Wesentlichen dem Außendurchmesser des Buchsenkontakts 37 entspricht, so dass die federnden Rastlaschen 42 beim Durchstecken des Kontaktanschlussteils 14 durch die Innenwand des Rastvorsprungs 43 an die Mantelfläche des Buchsenkontakts 37 angedrückt werden und nach Durchtritt durch den Rastvorsprung 43 wieder nach außen vorstehen. Hierdurch folgt eine Sicherung gegen eine axiale Bewegung des Kontaktanschlussteils 14 in dem Kontaktstecker 13 in bestückungsseitiger Axialrichtung. Dies ist erfindungsgemäß die Primärsicherung.

Eine Sekundärsicherung gegen eine ungewollte Bewegung des Kontaktanschlussteils 14 in bestückungsseitiger Axialrichtung wird durch die Steckerverriegelung 23 erreicht, welche entlang einer Berührungsfläche von Steckerträger 22 und Steckerverriegelung 23 relativ zu dem Steckerträger 22 verschiebbar ist. In einer zweiten Verschiebeposition, wie sie in Fig. 6 dargestellt ist, liegen die Durchgangsöffnungen 40 des Steckerträgers 22 und die Durchgangsöffnungen 41 der Steckerverriegelung 23 versetzt zueinander, wobei der Rand der Durchgangsöffnung 41 der Steckerverriegelung 23 in die Durchgangsöffnung 40 des Steckerträgers 22 und eine Ausnehmung 44 des Kontaktanschlussteils 14 eingreift und hierdurch eine Axialbewegung in Richtung des bestückungsseitigen Endes der Steckdose in dem Kontaktstecker 13 verhindert. Die Ausnehmung 44 ist im Wesentlichen durch seitlich von dem Buchsenkontakt 37 umfangseitig vorstehende Führungslaschen 45 des Kontaktanschlussteils 14 gebildet. Diese Führungslaschen 45 verhindern auch ein Durchstecken des Kontaktanschlussteils 14 durch den Steckerträger 22, indem die Führungslaschen 45 auf der den federnden Rastlaschen 42 gegenüberliegenden Seite an den Rastvorsprung 43 in der Durchgangsöffnung 40 des Steckerträgers 22 anstoßen. Dadurch lässt sich das Kontaktanschlussteil 14 also nicht in Richtung der Einsteckseite des Kontaktsteckers 13 durchschieben.

Ein erfindungsgemäß wesentliches Merkmal des Kontaktsteckers 13 liegt darin, dass die Achse 46 der Durchgangsöffnung 40 des Steckerträgers 22 geneigt zu der Achse 47 der Durchgangsöffnung 41 der Steckerverriegelung 23 verläuft, wobei die Durchgangsöffnung 40 des Steckerträgers 22 in einem Öffnungsbereich 48 bereits derart abgeschrägte und/oder aufgeweitete Wandungen aufweist, dass die Durchgangsöffnungen 40 und 41 des Steckerträgers 22 bzw. der Steckerverriegelung 23 in der in Fig. 7 dargestellten ersten Verschiebeposition an ihrer Berührungsfläche im Wesentlichen ohne einen größeren Versatz ineinander übergehen, wobei die Durchgangsöffnung 41 an der Berührungsfläche erfindungsgemäß vorzugsweise ggf. kleiner ausgebildet sein kann als die Durchgangsöffnung 40 an der Berührungsfläche, damit das Einstecken des Kontaktanschlussteils 13 durch die Steckerverriegelung 23 in den Steckerträger 22 verhakungsfrei möglich ist. Mit anderen Worten steht der Rand der Durchgangsöffnung 41 in der Berührungsfläche über den Rand der Durchgangsöffnung 40, vorzugsweise am gesamten Umfang, über, so dass das Kontaktanschlussteil 14 beim Einschieben nicht an den Rand der Durchgangsöffnung 40 anstößt, sondern daran vorbei geführt wird.

Diese Aufweitung der Durchgangsöffnung 40 im Öffnungsbereich 48 des Steckerträgers 22 ändert nichts daran, dass die Achse 46 der Durchgangsöffnung 40 koaxial mit der Steckrichtung des Buchsenkontakts 37 auf den Steckkontakt 11 ausgerichtet ist, da der Buchsenkontakt 37 des Kontaktanschlussteils 14 auch in dieser Richtung in den Steckerträger 22 eingesteckt werden könnte.

Wie Fig. 7 zu entnehmen, wird das Kontaktanschlussteil 14 jedoch schräg entlang der Richtung der Achse 47 der Durchgangsöffnung 41 in die Steckerverriegelung 23 und den Steckerträger 22 eingesteckt, bis die Führungslaschen 45 an dem Rastvorsprung 43 anstoßen und die federnden Rastlaschen 42 den Rastvorsprung 43 auf der gegenüberliegenden Seite hintergreifen. Hierdurch ist eine zuverlässige Primärverriegelung des Kontaktanschlussteils 14 in dem Kontaktstecker 13 erreicht. Nach dem Einstecken des Kontaktanschlussteils 14 wird die Steckerverriegelung 23 entlang der Berührungsfläche von Steckerverriegelung 23 und Steckerträger 22 relativ zu dem Steckerträger 22 in die in Fig. 6 dargestellte Position verschoben, in welcher der Rand der Durchgangsöffnung 41 in die hinter den Führungslaschen 45 ausgebildete Ausnehmung 44 des Kontaktanschlussteils 14 eingreift und dadurch eine von der Primärverriegelung unabhängige Sekundärverriegelung des Kontaktanschlussteils 14 erreicht.

Bei dem Verschieben der Steckerverriegelung 23 von der in Fig. 7 dargestellten ersten Verschiebeposition in die in Fig. 6 dargestellte zweite Verschiebeposition kippt auch das Kontaktanschlussteil 14, so dass dessen Achse mit der Achse 46 der Durchgangsöffnung 40 des Steckerträgers 22 zusammenfällt. Nur in dieser Ausrichtung kann der Buchsenkontakt 37 des Kontaktanschlussteils 14 auf den Steckkontakt 11 des Kontaktes 10 aufgesteckt werden.

Die Schrägstellung der Durchgangsöffnung 41 der Steckerverriegelung 23 entlang der gegenüber der Achse 46 der Durchgangsöffnung 40 geneigten Achse 47 hat erfindungsgemäß einen weiteren wichtigen Aspekt, welcher die Funktion des Dichtstopfens 39 des Kontaktanschlussteils 14 betrifft. In der in Fig. 6 dargestellten zweiten Verschiebeposition ist die Durchgangsöffnung 41 der Steckerverriegelung 23 im Bereich des Dichtstopfens 39 gerade mit der Durchgangsöffnung 40 des Steckertägers 22 zentriert. Mit anderen Worten liegt der Mittelpunkt der Durchgangsöffnung 41 im Bereich des Dichtstopfens 39 auf der (Mittel-)Achse 46 der Durchgangsöffnung 40 des Steckerträgers 22. Hierdurch greift der Dichtstopfen 39 mit seinen Dichtlippen an einer im Wesentlichen runden, entsprechend der Neigung der Durchgangsöffnung 41 in Querschnittsrichtung des Dichtstopfens 39 lediglich leicht ovalen Innenwandfläche der Durchgangsöffnung 41 an, in der noch eine gute Dichtwirkung erreicht wird, weil die Dichtlippen des Dichtstopfens 39 die nicht perfekt runde Form ausgleichen. Dies wäre bei einem stärkeren Versatz der Durchgangsöffnung 41 im Bereich des Dichtstopfens 39 gegenüber der Durchgangsöffnung 41 nicht möglich. Daher trägt die Schrägstellung der Durchgangsöffnung 41 neben der Sekundärverriegelung auch dazu bei, dass der Kontaktstecker 13 bestückungsseitig durch einfache Dichtstopfen um die in dem Kontaktanschlussteil 14 festgelegten Anschlussleitungen abgedichtet werden kann, wobei nicht mit Kontaktanschlussteilen 14 bestückte Durchgangsöffnungen erfindungsgemäß durch einen Blind-Dichtstopfen verschlossen werden, der zwangsläufig der Neigung der Durchgangsöffnung 41 folgt.

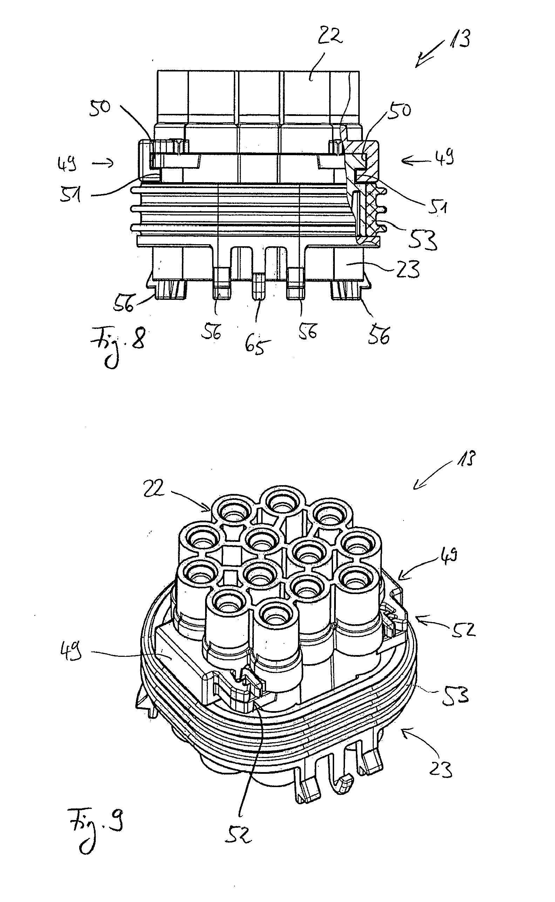

In den Darstellungen gemäß Fig. 8 und 9 ist der Verschiebemechanismus für die Relativverschiebung von Steckerträger 22 und Steckerverriegelung 23 dargestellt, der aus einer beidseitigen Nutführung 49 aufgebaut ist. Die Nutführung weist einander gegenüberliegende und in ihrer Öffnung einander zuweisende Nuten 50 auf, welche in innenliegende, voneinander wegweisende Nuten 51 eingreifen. In dem dargestellten Beispiel sind die aufeinander zuweisenden Nuten 50 an dem Steckerträger 22 und die voneinander wegweisenden Nuten 51 an der Steckerverriegelung 23 ausgebildet. Durch diese Art der Nutführung 49 sind der Steckerträger 22 und die Steckerverriegelung 23 in Axialrichtung und quer zur Verschieberichtung sicher aneinander fixiert.

Wie der dreidimensionalen Ansicht des Kontaktsteckers 13 in Fig. 9 zu entnehmen, sind an der Nutführung 49 auf jeder Seite jeweils Rastungen 52 vorgesehen, welche die erste Verschiebeposition, wie sie in Fig. 7 dargestellt ist, und die zweite Verschiebeposition, wie sie in Fig. 6 dargestellt ist, sichern. Hierdurch wird eine leichtere Montage insbesondere bei der Konfektionierung erreicht, da die beiden Verschiebepositionen definiert festgelegt sind, wobei in der ersten Verschiebeposition das Kontaktanschlussteil 14 in den Kontaktstecker 13 einfach eingesteckt und in der zweiten Verschiebeposition der so gesicherte Kontaktstecker 13 in den Einsteckraum 12 der Steckdose 1 auf die Steckkontakte 11 aufgesteckt werden kann.

In den Fig. 6 bis 9 ist ferner eine umfangsseitig an dem Kontaktstecker 13 ausgebildete Umfangsdichtung 53 zu erkennen, die den Außenumfang des Kontaktsteckers13 überragt und so eine Abdichtung an einer als Dichtfläche ausgebildeten (Innen-)Umfangsfläche 54 der Anschlussraumwandung 33 des Dosengehäuses 2 erlaubt. Durch diese Umfangsdichtung 53 wird der gesamte Anschlussraum 12 der Steckdose 1 bei eingesteckten und in den Durchgangsöffnungen 41 abgedichteten Kontaktstecker 13 zuverlässig abgedichtet.

Die Umfangsdichtung 53 liegt, wie in Fig. 6 und 7 gut zu erkennen, auf einem ebenfalls als Dichtfläche ausgebildeten Montageabschnitt 55 des Kontaktsteckers 13 auf, der vorzugsweise wie dargestellt an der bestückungsseitig ausgebildeten Steckerverriegelung 23 ausgebildet ist, um den Anschlussraum 12 der Steckdose 1 am bestückungsseitigen Rand der Anschlussraumwandung 33 abzudichten (vgl. Fig. 3). Um die Umfangsdichtung 53 auf dem Montageabschnitt 55 zu sichern, ist gesehen von dem bestückungsseitigen Ende der Steckerverriegelung 23 die Haltscheibe 25 auf den Rand des Montageabschnitts 25 aufgelegt und dort bspw. ultraschwall-verschweißt oder verrastet, wobei die Haltescheibe 25 den Montageabschnitt 55 in radialer Richtung nach außen überragt und einen seitlichen Anschlag für die Umfangsichtung 53 bildet. So wird diese auch beim Einstecken des Kontaktsteckers 13 in den durch die Anschlussraumwandung 33 gebildeten Anschlussraum 12 auf dem Montageabschnitt 55 gehalten.

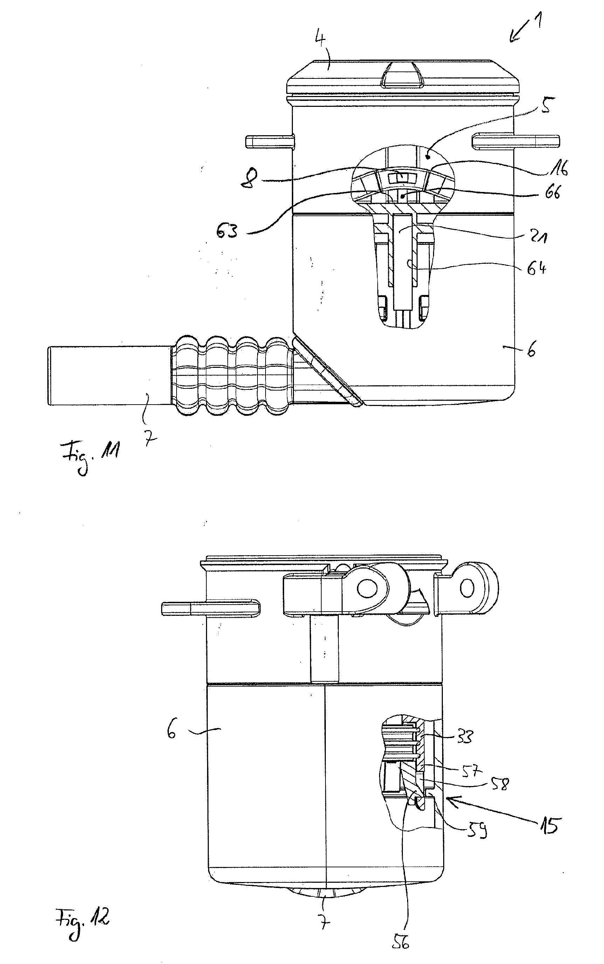

An der Haltescheibe 25 sind ferner nicht flexibel ausweichende Rasthaken 56 ausgebildet, die in Rastöffnungen 58 von radial seitlich ausweichenden Rastlaschen 57 des Dosengehäuses 2 zum Festlegen des Kontaktsteckers 13 an dem Dosengehäuse 2 verrasten. Wie insbesondere Fig. 12 zu entnehmen, sind die Rastlaschen 57 an der bestückungsseitigen Stirnseite der Anschlussraumwandung 33 in bestückungsseitige Richtung vorstehend angeformt und weisen die Rastöffnungen 58 auf, in welche die Rasthaken 56 der Haltescheibe 25 eingreifen. Die Rastlaschen 57 stützen sich an einem innen an der Außenkappe 6 umlaufenden Stabilisierungsvorsprung 59 ab, welcher sowohl die Wandung der Außenkappe 6 stabilisiert als auch die Rastlaschen 57 sichert, damit diese bei montierter Außenkappe 6 nicht radial ausweichen und die Rastverbindung 15 zwischen dem Kontaktstecker 13 und dem Dosengehäuse 2 lösen.

An der Innenwandfläche der Anschlussraumwandung 33 ist ferner ein Kodiervorsprung 60 ausgebildet, der das Einstecken des Kontaktsteckers 13 nur in der zweiten, in Fig. 6 dargestellten Verschiebeposition von Steckerträger 22 und Steckerverriegelung 22 erlaubt.

Gemäß einem weiteren, auch eigenständigen Aspekt der erfindungsgemäßen Steckdose ist in der Steckdose ferner ein Steckersensor 61 (vgl. Fig. 1) zur Detektion angeordnet, ob ein Stecker des Anhängerstromkreises in die Einstecköffnung 5 der Steckdose 1 eingesteckt ist, wobei der Steckersensor 61 als berührungslos arbeitender Magnetschalter 21 ausgebildet ist, welcher die Annäherung eines Magneten 8 an einen durch das Magnetfeld des Magneten 8 schaltbaren Kontakt des Magnetschalters 21 detektiert. Dazu ist der Magnet 8 in die Dichtung 16 aufgenommen, welche zur Aufnahme des Magneten 8 eine Einfügeöffnung 62 aufweist, durch welche der Magnet 8 unter elastischer Aufweitung der Einfügeöffnung 62 in die Dichtung 16 eingesteckt werden kann. Die Dichtung 16 wird beim Einstecken des Steckers durch die Stirnwand des Steckers auf den Boden 63 des auch als Einstecköffnung 5 bezeichnenden Einsteckraums gedrückt. Der Magnetschalter 21 ist an der dem Magneten 8 gegenüberliegenden Seite des Bodens 63 in dem Dosengehäuse 2 derart festgelegt, dass das Annähern des Magneten 8 an den Boden 63 des Einsteckraums 5 beim Einstecken des Steckers in die Steckdose den Magnetschalter 21 schaltet. Dazu ist der Magnetschalter 21 an der Außenseite des den Anschlussraum 12 bildenden Teils des Dosengehäuses 2 angeordnet, wozu der Magnetschalter 21 in eine an der Anschlussraumwandung 33 ausgebildeten Führungsöffnung 64 eingesteckt ist. In der Führungsöffnung 64 wird der Magnetschalter 21 durch einen hakenförmig ausgebildeten Haltevorsprung 65 gehalten, welcher an der Haltescheibe 25 vorgesehen ist.

Der Vorteil dieses berührungslos arbeitenden Steckersensors 61 mit einem Magneten 8 und einem Magnetschalter 21, welcher auch als Reed-Schalter bekannt ist, erlaubt es, das Einführen eines Steckers in die Einstecköffnung 5 der Steckdose 1 zuverlässig festzustellen, ohne dass eine mechanische Verbindung von der Einstecköffnung 5 zu dem Steckersensor 61 bestehen muss, durch welche Feuchtigkeit in den Anschlussraum 12 der Steckdose 2 eindringen könnte.

Um ein zuverlässiges Schalten des Steckersensors 21 zu erreichen, ist die Dichtung 16 aus einem elastischen Material derart geformt, dass ohne eine Krafteinwirkung des Steckers auf die Dichtung 16 ein Hohlraum 66 zwischen den den Magneten 8 tragenden Abschnitt der Dichtung 16 und dem Boden 63 der Einstecköffnung 5 der Steckdose 1 verbleibt (vgl. auch Fig. 11). In dieser Position ist der Magnet 8 soweit von dem Magnetschalter 21 entfernt, dass der schaltbare Kontakt des Magnetschalters 21 nicht geschaltet wird. Erst wenn die Dichtung 16 mit dem Magneten 8 durch den in die Steckdose 1 eingesteckten Stecker auf den Boden 63 des Einsteckraumes 5 gedrückt wird, schaltet der Magnetschalter 21 und zeigt so einen in die Steckdose 1 eingesteckten Stecker an.

Die Ausbildung des Hohlraums 66 zwischen der den Magneten 8 tragenden Dichtung 16 und dem Boden 63 des Einsteckraumes 5 der Steckdose 1 ist in Fig. 11 deutlich dargestellt, wobei ersichtlich ist, dass der Magnetschalter 21 in der Führungsöffnung 64 auf der dem Hohlraum 66 gegenüberliegenden Seite des Bodens 63 der Einstecköffnung 5 angeordnet ist.

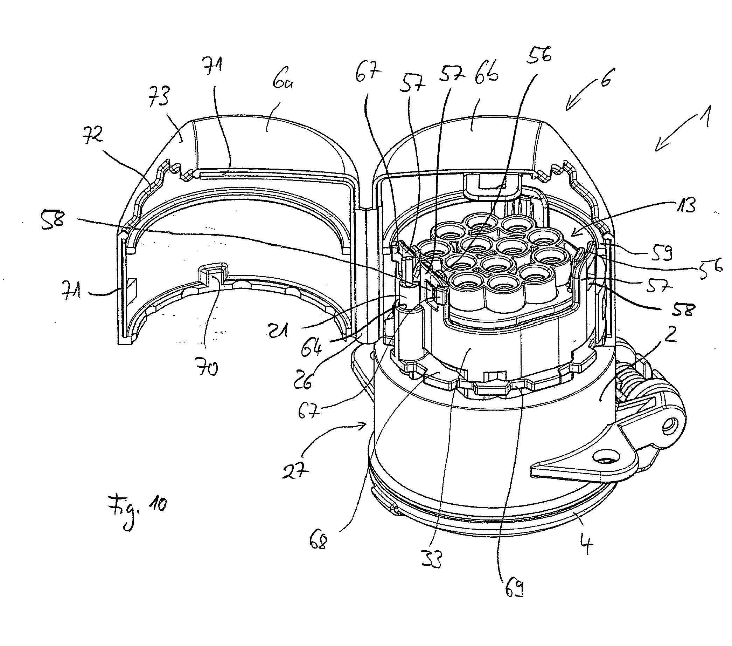

Fig. 10 zeigt eine dreidimensionale Ansicht der Steckdose 1 mit dem in den Anschlussraum 12 aufgenommenen Kontaktstecker 13, der über die an der Haltescheibe 25 vorgesehenen Rasthaken 56 in den Rastöffnungen 58 der Rastlaschen 57 verrastet ist. An den neben dem Magnetschalter 21 vorgesehenen Rastlaschen 57 sind ferner Stützvorsprünge 67 vorgesehen, welche die Rastlasche 57 an dem Stabilisierungsvorsprung 59 der Außenkappe 6 abstützen.

Zur Montage der Außenkappe 6 ist an der Anschlussraumwandung 33 ein radial nach außen vorspringender Befestigungsabschnitt 68 ausgebildet, der als flanschartiger Vorsprung radial vorstehend an der Anschlussraumwandung 33 festgelegt ist. Der Befestigungsabschnitt ragt erfindungsgemäß weniger weit radial nach außen vor als der Abschnitt 27 des Dosengehäuses 2 mit dem größten Außendurchmesser. Dabei weist der Befestigungsabschnitt 68 Einkerbungen 69 auf, die bspw. einen Winkelabstand von 30° aufweisen. In diese Einkerbungen 69 kann ein Montagevorsprung 70 an der Innenseite der Außenkappe 6 eingefügt werden, so dass die Außenkappe 6 jeweils um einen Winkelabstand von 30° gedreht an der Steckdose 1 bzw. dem Dosengehäuse 2 festgelegt werden kann.

Die Außenkappe 6 weist ein Filmscharnier 26 auf, welches zwei Hälften 6a, 6b der Außenkappe 6 klappbar verbindet. An der Stoßfläche der Hälften 6a der Außenkappe 6 ist ein Spritzschutz 71 vorgesehen, welcher die andere Hälfte 6b der Außenkappe hintergreift, wenn die beiden Hälften 6a, 6b über einen üblichen Rastmechanismus miteinander verrastet sind.

Vor dem Zusammenklappen und Verrasten der Hälften 6a, 6b der Außenkappe 6 wird die Tülle 7 in eine in der Außenkappe 6 vorgesehene Tüllenöffnung 72 eingesetzt, die sich in einem abgeschrägten Abschnitt 73 der Außenkappe 6 befindet. Dies erlaubt ein Anbringen der Tülle 7 sowohl in der in Fig. 11 dargestellten radialen Richtung als auch in einer in Längsachse der Steckdose verlaufenden axialen Richtung, die jedoch nicht bildlich dargestellt ist.

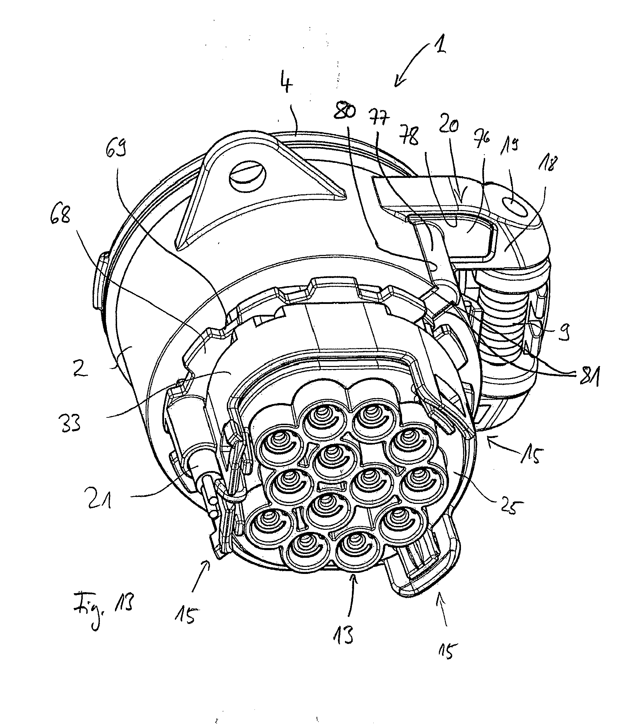

Gemäß einem weiteren erfindungsgemäßen Aspekt ist die optische Signaleinrichtung 20 zum Anzeigen eines außerhalb der Steckdose detektierten Zustands in einem Trägerelement 18 für den Deckel 4 angeordnet, welches Trägerelement 18 die Schwenkachse 19 des Deckels 4 trägt. Dies ist in Fig. 13 dargestellt

Die in Fig. 2 separat dargestellte optische Signaleinrichtung 20 weist einen Leuchtkörper 75, insbesondere eine LED, tragenden Sockel 76 und ein daran anschließendes, ggf. als Dichtelement ausgebildetes Führungselement 77 auf. In dem Führungselement 77 sind nicht dargestellte Signalleitungen zu der optischen Signaleinrichtung 20 geführt, die vorzugsweise zusammen mit den Anschlussleitungen zu den Kontakten 10 sowie ggf. den Signalleitungen zu dem Magnetschalter 21 aus der Steckdose 1 herausgeführt werden. Die optische Signaleinrichtung 20 ist also mit der Signalleitung fest verbunden und bildet eine unverlierbare Baueinheit aus Leuchtkörper 75, Sockel 67 und Führungselement 77 mit den darin geführten Signalleitungen.

Die optische Signaleinheit 20 ist mit ihrem Sockel 76 in eine auf der dem Deckel 4 gegenüberliegenden Seite offene Ausnehmung 78 in das Trägerelement 18 eingesetzt, wobei der Leuchtkörper 75 optische Signaleinrichtung 20 aus einer Öffnung 79 in dem Trägerelement 18 in Richtung des Deckels 4 herausragt (vgl. auch Fig. 2). Dadurch ist der Leuchtkörper 75 Signaleinrichtung 20 gut von außen sichtbar, ohne dass hierfür zusätzlicher Bauraum benötigt wird.

Das Dosengehäuse 2 weist in seiner Außenwand im Anschluss an die Ausnehmung 78 in dem Trägerelement 18 eine Nut 80 auf, in welche das als Dichtelement ausgeführte Führungselement 77 mit den Signalleitungen geführt ist. Die Nut 80 erstreckt bis zu dem dem Deckel 4 gegenüberliegenden rückwärtigen Ende des Dosengehäuses 2 bzw. des Abschnitts 27 des Dosengehäuses 2 mit dem größten Außendurchmesser, so dass die Signalleitung unmittelbar in den von der Außenkappe 6 der Steckdose 1 ummantelten Bereich eingeführt werden kann. Vorzugsweise sind die Ausnehmung 78 und die Nut 80 in dem Dosengehäuse 2 sowie der Sockel 76 und das Führungselement 77 der optischen Signaleinrichtung 20 derart aufeinander angepasst, dass die optische Signaleinrichtung 20 in der Ausnehmung 78 und der Nut 80 verklemmt. Dazu ist an dem bestückungsseitigen Ende der Nut 80 ein in die Nut hereinragender Halteabschnitt 81 vorgesehen, welcher das Führungselement formschlüssig in der Nut festlegt. Da die Signaleinrichtung 20 eine Baueinheit aus Führungselement 77 und Sockel 76 bildet, wird die gesamte optische Signaleinrichtung hierdurch in der Nut 80 und der Ausnehmung 78 festgeklemmt.

### Bezugszeichenliste:

- 1: Steckdose
- 2: Dosengehäuse
- 3: Kontaktträger, Kontakteinsatz
- 4: Deckel
- 5: Einstecköffnung, Einsteckraum
- 6: Außenkappe
- 7: Tülle
- 8: Magnet
- 9: Deckelfeder
- 10: Kontakt
- 11: Steckkontakt
- 12: Anschlussraum
- 13: Kontaktstecker
- 14: Kontaktanschlussteil
- 15: Rastverbindung
- 16: Dichtung
- 17: Deckelkappe
- 18: Trägerelemente
- 19: Schwenkachse
- 20: optische Signaleinrichtung
- 21: Magnetschalter
- 22: Steckerträger
- 23: Steckerverriegelung
- 24: Umfangsdichtung
- 25: Haltescheibe
- 26: Filmscharnier
- 27: Abschnitt des Dosengehäuses mit größtem Außendurchmesser
- 28: Steg
- 29: Durchgangsöffnung, Kontaktkammer des Kontaktträgers
- 30: einsteckseitige Öffnung
- 31: bestückungsseitige Öffnung
- 32: zylindrische Mantelfläche
- 33: Anschlussraumwandung
- 34: Spülöffnung, Spülbohrung
- 35: Tannenbaum- bzw. Dornprofil
- 36: Nase
- 37: Buchsenkontakt des Kontaktanschlussteils
- 38: Crimp-Kontaktanschluss des Kontaktanschlussteils
- 39: Dichtstopfen
- 40: Durchgangsöffnung des Steckerträgers
- 41: Durchgangsöffnung der Steckerverriegelung
- 42: federnde Rastlaschen
- 43: Rastvorsprung
- 44: Ausnehmung
- 45: Führungslasche
- 46: Achse der Durchgangsöffnung des Steckerträgers
- 47: Achse der Durchgangsöffnung der Steckerverriegelung
- 48: Öffnungsbereich
- 49: Nutführung
- 50: aufeinander zuweisende Nuten
- 51: voneinander wegweisende Nuten
- 52: Rastungen
- 53: Umfangsdichtung
- 54: Umfangsfläche, Innenumfangsfläche des Dosengehäuses
- 55: Montageabschnitt
- 56: Rasthaken, Rastelemente
- 57: Rastlaschen
- 58: Rastöffnungen
- 59: Stabilisierungsvorsprung
- 60: Kodiervorsprung
- 61: Steckersensor
- 62: Einfügeöffnung der Dichtung für den Magneten
- 63: Boden
- 64: Führungsöffnung
- 65: Haltevorsprung
- 66: Hohlraum
- 67: Stützvorsprung
- 68: Befestigungsabschnitt
- 69: Einkerbung
- 70: Montagevorsprung
- 71: Spritzschutz
- 72: Tüllenöffnung
- 73: abgeschrägter Abschnitt
- 74: Deckeldichtung
- 75: Leuchtkörper, LED
- 76: Sockel
- 77: Führungselement
- 78: Ausnehmung
- 79: Öffnung in dem Trägerelement
- 80: Nut
- 81: Halteabschnitt

## Patentansprüche

1. Steckdose eines Kraftfahrzeugs für die Aufnahme eines Steckers eines Anhängerstromkreises zur Anbindung an das elektrische System eines Kraftfahrzeugs mit einem an dem Kraftfahrzeug festlegbaren Dosengehäuse (2), mit einem mit dem Dosengehäuse (2) einteilig verbundenen Kontaktträger (3), von dem Anschlussleitungen an das elektrische System des Kraftfahrzeugs wegführbar sind, und mit einem an das Dosengehäuse (2) angelenkten Deckel (4) zum abdichtenden Verschließen einer Einstecköffnung (5) für den Stecker, **dadurch gekennzeichnet, dass** in den Kontaktträger (3) Kontakte (10) in derart abdichtender Weise aufnehmbar sind, dass keine Feuchtigkeit aus dem Bereich der Einstecköffnung (5) durch den Kontaktträger (3) durchtreten kann.

2. Steckdose nach Anspruch 1, **dadurch gekennzeichnet, dass** die Kontakte (10) an ihren bestückungsseitigen Enden als Kontaktanschluss einen Steckkontakt (11) aufweisen, wobei die Steckkontakte (11) aus dem Kontaktträger (3) in einen Anschlussraum (12) der Steckdose (1) hineinragen.

3. Steckdose nach Anspruch 2, **dadurch gekennzeichnet, dass** ein in dem Dosengehäuse (2) festlegbarer Kontaktstecker (13) vorgesehen ist, welcher auf die Steckkontakte (11) der Kontakte (10) aufsteckbar ist, wobei Kontaktanschlussteile (14) zum Aufstecken auf die Steckkontakte (11) der Kontakte (10) in den Kontaktstecker (13) aufnehmbar sind, wobei der Kontaktstecker (13) einen Steckerträger (22) zum Aufnehmen und Primärverriegeln der Kontaktanschlussteile (14) und eine Steckerverriegelung (23) zum Aufnehmen und Sekundärverriegeln der Kontaktanschlussteile (14) aufweist, wobei der Steckerträger (22) und die Steckerverriegelung (23) Durchgangsöffnungen (40, 41) zur Aufnahme der Kontaktanschlussteile (14) aufweisen und zueinander in Richtung quer zu den Achsen (46) der Durchgangsöffnungen (40) des Steckerträgers (22) verschiebbar ausgebildet sind und wobei die Achsen (47) der Durchgangsöffnungen (41) der Steckerverriegelung (23) zu den Achsen (46) der Durchgangsöffnungen (40) des Steckerträgers (22) geneigt sind.

4. Steckdose nach Anspruch 3, **dadurch gekennzeichnet, dass** die Durchgangsöffnungen (40, 41) von Steckerträger (22) und Steckerverriegelung (23) an den aufeinander liegenden Berührungsflächen in einer ersten Verschiebeposition übereinander liegen und in einer zweiten Verschiebeposition versetzt zueinander sind, wobei in der zweiten Verschiebeposition insbesondere der Rand der Durchgangsöffnung (41) der Steckerverriegelung (23) in die Durchgangsöffnung (40) des Steckerträgers (22) und in eine Ausnehmung (44) des Kontaktanschlussteils (14) eingreift.

5. Steckdose nach Anspruch 3 oder 4, **dadurch gekennzeichnet, dass** am Außenumfang des Kontaktsteckers (13) eine Umfangsdichtung (53) angeordnet ist, welche nach Aufstecken des Kontaktsteckers (13) auf die Steckkontakte (11) des Kontaktträgers (3) an einer als Innenumfangsfläche (54) des Dosengehäuses (2) ausgebildeten Dichtfläche anliegt, und/oder dass an dem bestückungsseitigen Ende eines Kontaktanschlussteils (14) ein die Anschlussleitung umgebender Dichtstopfen (39) zur Aufnahme in die Durchgangsöffnung (41) der Steckerverriegelung (23) vorgesehen ist und/oder dass in Durchgangsöffnungen (41) der Steckerverriegelung (23) ohne Kontaktanschlussteil (41) ein Blind-Dichtstopfen einsteckbar ist.

6. Steckdose nach einem der Ansprüche 3 bis 5, **dadurch gekennzeichnet, dass** an dem Kontaktstecker (13) eine Haltescheibe (25) in bestückungsseitiger Richtung anschließend an die Umfangsdichtung (53) festlegbar oder ggf. einteilig festgelegt ist, welche in radialer Richtung über den Kontaktstecker (13) vorsteht.

7. Steckdose nach Anspruch 6, **dadurch gekennzeichnet, dass** die Haltescheibe (25) Rastelemente (56) zur Verbindung des Kontaktsteckers (13) mit dem Dosengehäuse (2) aufweist.

8. Steckdose nach einem der vorhergehenden Ansprüche, **dadurch gekennzeichnet, dass** in der Steckdose (1) ein Steckersensor (61) zur Detektion anordnenbar ist, ob der Stecker des Anhängerstromkreises in die Einstecköffnung (5) der Steckdose (1) eingesteckt ist, wobei der Steckersensor (61) als berührungslos arbeitender Magnetschalter (21) ausgebildet ist, welcher die Annäherung eines Magneten (8) an ein durch das Magnetfeld des Magneten (8) schaltbaren Kontakt des Magnetschalters (21) detektiert.

9. Steckdose nach Anspruch 8, **dadurch gekennzeichnet, dass** der Magnet (8) in eine auf dem Boden (63) der zwischen dem Dosengehäuse (2) und dem Kontaktträger (3) ausgebildeten Einstecköffnung (5) angeordnete Dichtung (16) aufnehmbar ist, welche beim Einstecken des Steckers durch die Stirnwand des Steckers auf den Boden (63) des Einsteckraums gedrückt wird, und dass der Magnetschalter (21) an der dem Magneten (8) gegenüberliegenden Seite des Bodens (63) des Einsteckraums (5) in dem Dosengehäuse (2) festlegbar ist.

10. Steckdose nach 9, **dadurch gekennzeichnet, dass** die Dichtung (16) als ringförmige Flachdichtung ausgebildet ist, welche zumindest in dem den Magnet (8) tragenden Abschnitt doppelwandig aufgebaut ist und eine Einfügeöffnung (62) für den Magnet (8) aufweist.

11. Steckdose nach einem der vorhergehenden Ansprüche, **dadurch gekennzeichnet, dass** das Dosengehäuse (2) in einem Abschnitt (27) mit dem größten Außendurchmesser hohlzylinderförmig ausgebildet ist, welcher Abschnitt (27) die Einheit aus Kontaktträger (3) und Kontaktstecker (13) und/oder den Kontaktträger (3) in bestückungsseitiger Richtung nicht überragt, und dass an dem Dosengehäuse (2) ein sich bestückungsseitig erstreckender Befestigungsabschnitt (68) festgelegt ist, der in Radialrichtung bezogen auf die Mittelpunktachse des hohlzylinderförmigen Dosengehäuses (2) nicht über den Abschnitt (27) des Dosengehäuses (2) mit dem größten Außendurchmesser vorsteht.

12. Steckdose nach einem der vorhergehenden Ansprüche, **dadurch gekennzeichnet, dass** das Dosengehäuse (2) eine sich bestückungsseitig erstreckende Anschlussraumwandung (33) zur Ausbildung eines den Kontaktstecker (13) aufnehmenden Anschlussraums (12) aufweist, wobei die Anschlussraumwandung (33) in Radialrichtung bezogen auf die Mittelpunktachse des hohlzylinderförmigen Dosengehäuses (2) nicht über den Abschnitt (27) des Dosengehäuses (2) mit dem größten Außendurchmesser vorsteht.

13. Steckdose nach Anspruch 12, **dadurch gekennzeichnet, dass** die Anschlussraumwandung (33) an ihrem bestückungsseitigen Rand eine als Innenumfangsfläche (54) ausgebildete Dichtfläche aufweist und/oder dass an der Stirnseite des bestückungsseitigen Rands der Anschlussraumwandung (33) sich bestückungsseitig erstreckende Rastlaschen (57) erstrecken, an welchen der Kontaktstecker (13) verrastbar ist.

14. Steckdose nach Anspruch 12 oder 13, **dadurch gekennzeichnet, dass** an der Innenwandfläche der Anschlussraumwandung (33) ein Kodiervorsprung (60) ausgebildet ist, welcher ein Einstecken des Kontaktsteckers (13) nur in der zweiten Verschiebeposition von Steckerträger (22) und Steckerverriegelung (23) erlaubt.

15. Steckdose nach einem der vorhergehenden Ansprüche, **dadurch gekennzeichnet, dass** an der Steckdose (1) in bestückungsseitiger Richtung eine Außenkappe (6) festlegbar ist, welche den Anschlussraum (12) abdeckt und aus der durch eine Tülle (7) die Anschlussleitungen ausführbar sind, wobei die Tülle (7) vorzugsweise an einem abgeschrägten Abschnitt (73) der Außenkappe (6) festlegbar ist.

16. Steckdose nach Anspruch 15, **dadurch gekennzeichnet, dass** die Außenkappe (6) an einem Umfangsrand ein Filmscharnier (26) sowie einen Rastmechanismus an den Stoßseiten des Umfangsrands aufweist.

17. Steckdose nach einem der vorhergehenden Ansprüche, **dadurch gekennzeichnet, dass** eine optische Signaleinrichtung (20) zum Anzeigen eines außerhalb der Steckdose detektierten Zustands in einem Trägerelement (18) für den Deckel (4) anordenbar ist, welches Trägerelement (18) die Schwenkachse (19) des Deckels (4) trägt.
